# EUROPEAN PATENT APPLICATION

(11) **EP 2 712 185 A1**
(43) Date of publication of application: **26.03.2014**
(21) Application number: 12786187.0
(22) Date of filing: 18.05.2012
(51) Int. Cl.: H04N 7/173, G06F 9/50

(54) **INTEGRATED BROADCAST/COMMUNICATION RECEPTION DEVICE**

(30) Priority: 19.05.2011 JP 2011112712
(71) Applicant: Nippon Hoso Kyokai, Tokyo 150-8001 (JP)
(72) Inventor: FUJISAWA Hiroshi, Tokyo 157-8510 (JP); MITSUYA Shigeaki, Tokyo 157-8510 (JP); MATSUMURA Kinji, Tokyo 157-8510 (JP); BABA Akitsugu, Tokyo 157-8510 (JP); TAKECHI Masaru, Tokyo 157-8510 (JP); KANATSUGU Yasuaki, Tokyo 157-8510 (JP); HAMADA Hiroyuki, Tokyo 157-8510 (JP)
(74) Representative: Tomlinson, Kerry John
(86) International application number: PCT/JP2012/062806
(87) International publication number: WO 2012/157754

(57) **Abstract**

The integrated broadcasting communications receiver (400) receives from an application, by the resource request receiving unit (416a), a normal resource request and a resource request with time reservation for specifying a usage start time, then determines, by the resource allocating unit (416b), for the normal resource request and the resource request with time reservation received by the resource request receiving unit (416a) whether or not the resource requests can be granted, and then allocates one or more resources. When the resource request with time reservation is not granted at the initial usage start time, the resource allocating unit (416b) delays the usage start time and determines at the delayed usage start time again whether or not the resource request can be granted.

## Description

### TECHNICAL FIELD

The present invention relates to an integrated broadcasting communications receiver in an integrated broadcasting communications system that provides a hybrid service to integrate digital broadcasting and communications.

The present application claims the foreign priority benefit of the filing date of Japanese Patent Application No. JP2011/112712, filed on May 19, 2011 in Japan Patent Office, which is incorporated herein by reference.

### BACKGROUND OF THE INVENTION

Recently, a hybrid service that integrates and unites digital broadcasting and communications utilizing the advantages of each thereof has been proposed. Such a service realizes various services by executing application programs (hereinafter referred to as an application or applications as appropriate) in the integrated broadcasting and communications receiver.

The application execution engine platform for digital broadcasting is standardized with Non-Patent Document 1. The standardization of this application execution engine platform also includes a standardization of the transmission of application information or the like.

### PRIOR ART DOCUMENT

### Non-Patent Document

1. Association of Radio Industries and Businesses, "ARIB STD-B23 Version 1.2: Application Execution Engine Platform for Digital Broadcasting", July 29, 2009

### SUMMARY OF THE INVENTION

### Problems to be solved by the Invention

In a system running multiple applications in parallel, a resource manager manages allocation of one or more resources required to run each application, such as a memory, a display device, an external storage device, and a decoder. At this time, each application requests the resource manager for one or more resources required for execution, resulted in the immediate allocation of one or more resources that are not used by other applications and denial for the one or more resources in use. Therefore, when many applications are to be executed in an integrated broadcasting communications receiver having relatively poor resources, applications are prone to be unexecuted due to resource shortage. In addition, such an application needs to repeat a request for the resource to be allocated until the resource becomes available. For this reason, the processing load grows at the integrated broadcasting communications receiver.

The present invention has been made, in view of the challenges mentioned above, to provide an integrated broadcasting communications receiver that allows applications to have one or more resources allocated more reliably and to be executed with higher accuracy.

### Means for solving Problem

In order to solve the problems mentioned above, an integrated broadcasting communications receiver according to claim 1 includes: a broadcast receiving unit that receives information via a broadcast wave; a communications transceiver that transmits and receives information via a communications network; an application executing unit that executes a number of applications in parallel; a composing and presenting unit that composes and presents contents presented by the application executing unit and program contents contained in the information received by the broadcast receiving unit; an application obtaining unit that obtains an application via the communications transceiver; and an application controlling unit that controls operation of the application obtained by the application obtaining unit, based on the application activation information which controls the operation of the application, and is configured with a resource request receiving unit and a resource allocating unit.

According to such a configuration, the integrated broadcasting communications receiver receives from an application, by the resource request receiving unit, a first resource request that requests one or more resources to be allocated at a resource request time, and a second resource request, having a time reservation feature, that specifies a usage start time for requesting one or more resources to be allocated at the specified usage start time. Then, the integrated broadcasting communications receiver determines, by the resource allocating unit, for the first and second resource requests received by the resource request receiving unit whether or not the resource requests can be granted, depending on the availability of one or more resources to be allocated, by referring to information that indicates a resource usage status, and then allocates one or more resources.

At this time, the integrated broadcasting communications receiver determines, by the resource allocating unit, for the first resource request received by the resource request receiving unit, at the reception time of the first resource request, whether or not the first resource request can be granted, and allocates one or more resources to the application that has made the first resource request, when the first resource request is granted. In addition, the integrated broadcasting communications receiver determines, by the resource allocating unit, for the second resource request received by the resource request receiving unit, at the usage start time, whether or not the second resource request can be granted, then allocates one or more resources to the application that has made the second resource request, when the second resource request is granted, or delays the usage start time and notifies the application that has made the second resource request that the usage start time has been delayed, when the second resource request is not granted. Further, the integrated broadcasting communications receiver determines, by the resource allocating unit, for the second resource request which has not been granted at the initial usage start time and has been delayed, again at the delayed usage start time, whether or not the resource request can be granted.

The integrated broadcasting communications receiver according to claim 2 is configured such that the resource allocating unit in the integrated broadcasting communications receiver according to claim 1 determines whether or not the resource request can be granted, in line with the execution priority of the application.

With this configuration, when the integrated broadcasting communications receiver receives the second resource request from the application, by the resource request receiving unit, and then receives a resource request from other application to use the same resource before the usage start time for the aforesaid second resource request, and when the execution priority of the other application is higher than the execution priority of the application which has made the aforesaid second resource request, the resource allocating unit delays the usage start time for the aforesaid second resource request, notifies the application which has made the aforesaid second resource request that the usage start time has been delayed, and grants the resource request from the other application.

### Effects of the Invention

According to the invention described in claim 1, the integrated broadcasting communications receiver provides a resource request having a time reservation feature for requesting a resource allocation at the specified usage start time, allowing to allocate the resource by delaying the usage start time even when the resource allocation is impossible at the time initially specified, therefore there is no need any more for the application to repeat a resource request until the resource is allocated and the integrated broadcasting communications receiver can allocate one or more resources more reliably for applications without increasing processing loads significantly, and execute applications with higher accuracy.

According to the invention described in claim 2, as the integrated broadcasting communications receiver allocates one or more resources to an application having a higher execution priority, by delaying the usage start time of a resource request with time reservation from an application having a lower execution priority, the application having a higher execution priority can be executed easily and preferentially.

### BRIEF DESCRIPTION OF DRAWINGS

FIGS. 1A-1C are block diagrams showing a configuration of an integrated broadcasting communications receiver according to an embodiment of the present invention, and a configuration of an integrated broadcasting communications system that includes the integrated broadcasting communications receiver.
FIG. 2 is a diagram showing a data structure of an application activation information file for controlling an application that runs on the integrated broadcasting communications receiver according to an embodiment of the present invention.
FIG. 3 is a diagram illustrating an example of control information in the application activation information used in the integrated broadcasting communications receiver according to an embodiment of the present invention.
FIG. 4 is a diagram showing a data structure of an active application identification information DB (Data Base) according to an embodiment of the present invention.
FIGS. 5A and 5B are diagrams showing data structures of resource information according to an embodiment of the present invention, where FIG. 5A shows a resource inventory list and FIG. 5B shows a resource usage information DB.
FIGS. 6A and 6B are diagrams showing data structures of an application activation information DB according to an embodiment of the present invention, where FIG. 6A shows an example and FIG. 6B shows another example.
FIG. 7 is a flowchart illustrating a flow of operations to obtain application activation information from broadcast waves, by the integrated broadcasting communications receiver according to an embodiment of the present invention.
FIG. 8 is a flowchart showing a flow of operations to obtain application activation information from data broadcast, by the integrated broadcasting communications receiver according to an embodiment of the present invention.
FIG. 9 is a flowchart showing a flow of operations to obtain application activation information via a communications network, by the integrated broadcasting communications receiver according to an embodiment of the present invention.
FIG. 10 is a flowchart showing a flow of operations to obtain application activation information via a push notification, by the integrated broadcasting communications receiver according to an embodiment of the present invention.
FIG. 11 is a flowchart showing a flow of operations to activate and terminate an application, by the integrated broadcasting communications receiver according to an embodiment of the present invention.
FIG. 12 is a flowchart illustrating a flow of operations to terminate a child application, by the integrated broadcasting communications receiver according to an embodiment of the present invention.
FIG. 13 is a flowchart showing a flow of operations to select an application, by the integrated broadcasting communications receiver according to an embodiment of the present invention.
FIG. 14 is a flowchart showing a flow of operations to control an application when switching a program channel, by the integrated broadcasting communications receiver according to an embodiment of the present invention.
FIG. 15 is a flowchart illustrating a flow of operations to control a decoder management, by the integrated broadcasting communications receiver according to an embodiment of the present invention.
FIG. 16 is a flowchart illustrating a flow of operations for a resource management, by the integrated broadcasting communications receiver according to an embodiment of the present invention.
FIG. 17 is a flowchart showing a flow of operations to transition from the data broadcast service to the hybrid service, by the integrated broadcasting communications receiver according to an embodiment of the present invention.
FIG. 18 is a flowchart showing a flow of operations to filter application activation information, by the integrated broadcasting communications receiver according to a modification of the embodiment of the present invention.

### EMBODIMENTS OF THE INVENTION

Hereinafter, description will be given of embodiments to implement the integrated broadcasting communications receiver according to the present invention, with reference to drawings as appropriate.

### Configuration of Integrated Broadcasting Communications System

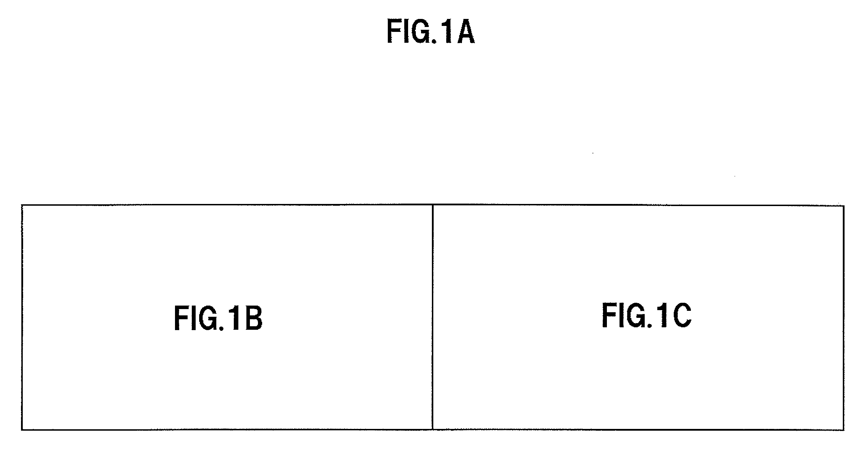

As shown in FIGS. 1A-1C, an integrated broadcasting communications receiver 400 according to an embodiment of the present invention is the integrated broadcasting communications receiver of an integrated broadcasting communications system S that includes a broadcast transmitting apparatus 100, an application server 200, a service server 210, an application activation information server 300, and a push notification server 310.

In the integrated broadcasting communications system S, the broadcast transmitting apparatus 100 is an apparatus, operated by a broadcaster, to transmit broadcast contents (broadcast programs), program delivery information or the like to the integrated broadcasting communications receiver 400 via broadcasting. Note that the broadcast transmitting apparatus 100 may transmit those to be broadcasted via radio waves, such as terrestrial digital broadcasting and satellite broadcasting, as well as those to be broadcasted via cable broadcasting or a network. In addition, the broadcast transmitting apparatus 100 attaches application activation information to the broadcast wave and transmits it, where the application activation information is information for controlling execution of an application that operates in conjunction with the program channel.

It should be noted that the program channel refers to a series of programs that may be broadcast as part of the schedule programmed by the broadcaster.

The application server (application delivery server) 200 is a server, operated by a service provider, to send application programs to the integrated broadcasting communications receiver 400. Alternatively, the application server 200 may be operated by the broadcaster itself, or by an author or authors who has/have created the application.

The service server (content delivery server) 210 is a server, operated by the service provider who operates the application server 200, to deliver the contents of the hybrid service to the integrated broadcasting communications receiver 400.

The application activation information server (application activation information delivery server) 300 is a repository for storing the application activation information that is information for controlling execution of an application, and works as a server to transmit the application activation information stored therein to the integrated broadcasting communications receiver 400, in response to a request therefrom. Note that the application activation information server 300 is intended to manage the application activation information that is not transmitted via broadcast from the broadcast transmitting apparatus 100. The application activation information server 300 may be installed, for example, at the certification authority (third-party institution) that verifies applications which service providers have created in advance, and holds only application activation information associated with applications that have been approved (A or Authorized applications). Alternatively, the application activation information server 300 may be the one that keeps application activation information associated with applications (generic applications) such as those authored by service providers (including general users) and not approved by the certification authority.

The push notification server 310 is a server that notifies the integrated broadcasting communications receiver 400 which has requested a notice about an update to the application activation information in advance, when the application activation information has been updated, of the updated application activation information, and aims to activate or terminate an application dynamically, by making a push notification that transmits the application activation information to the integrated broadcasting communications receiver 400 via a communications network NET at a timing that has not been prepared in advance. It should be noted that the push notification server 310 may be combined with the application server 200 or the application activation information server 300.

In addition, all of the application server 200, the service server 210, the application activation information server 300, the push notification server 310, and the integrated broadcasting communications receiver 400 are connected to each other via the communications network NET. It should be noted that the integrated broadcasting communications system S may include a number of the broadcast transmitting apparatuses 100, the application servers 200 , the service servers 210, the application activation information servers 300, and the push notification servers 310, as well as the integrated broadcasting communications receivers 400, respectively.

The integrated broadcasting communications receiver 400 is intended to receive and present the broadcast contents transmitted from the broadcast transmitting apparatus 100. In addition, by obtaining (download) and executing application programs via the communications network NET from the application server 200, the integrated broadcasting communications receiver 400 is intended to receive contents to be delivered via the communications network NET from the service server 210 which is operated by a service provider, then to integrate and unite the contents with the broadcast contents transmitted by broadcast, to be provided as a hybrid service.

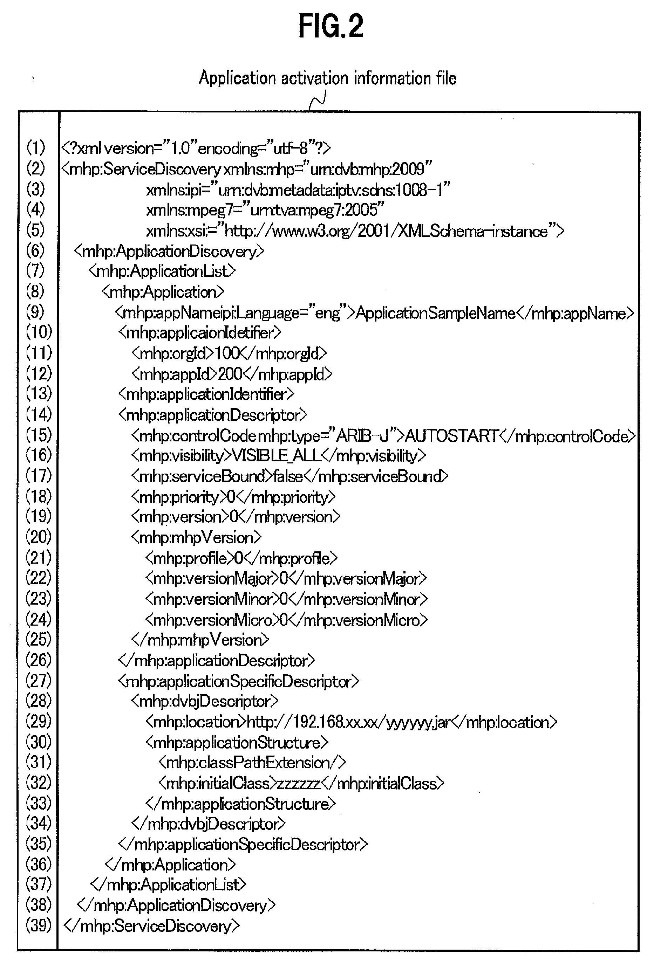

Any application that runs in the integrated broadcasting communications receiver 400 is, for example, controlled over the operation by the application activation information. A description will be given of a data structure of the application activation information, with reference to FIG. 2. The application activation information used in the embodiment of the present invention is configured to include equivalent information to that of the AIT (Application Information Table) defined by ARIB STD-B23 (ARIB-J). The application activation information shown in FIG. 2 is an example of a case described in XML (extensible Markup Language) format. Note that the numbers (1) to (39) in the left column are line numbers added for the convenience of explanation. In addition, the application activation information is not limited to a file in XML format, and it may be transmitted as data in binary format or in other format.

As shown in FIG. 2, the application activation information is configured to include: application identification information that is information for identifying the application (orgId at (11), appId at (12)); dependency information that indicates whether the application is coupled with a program channel (service) (serviceBound at (17)); priority information that indicates an execution priority of the application (priority at (18)); control information that controls operations of the application (controlCode at (15)); and access information that indicates an access point to obtain the application (location at (29)). Alternatively, single application activation information may include information about multiple applications.

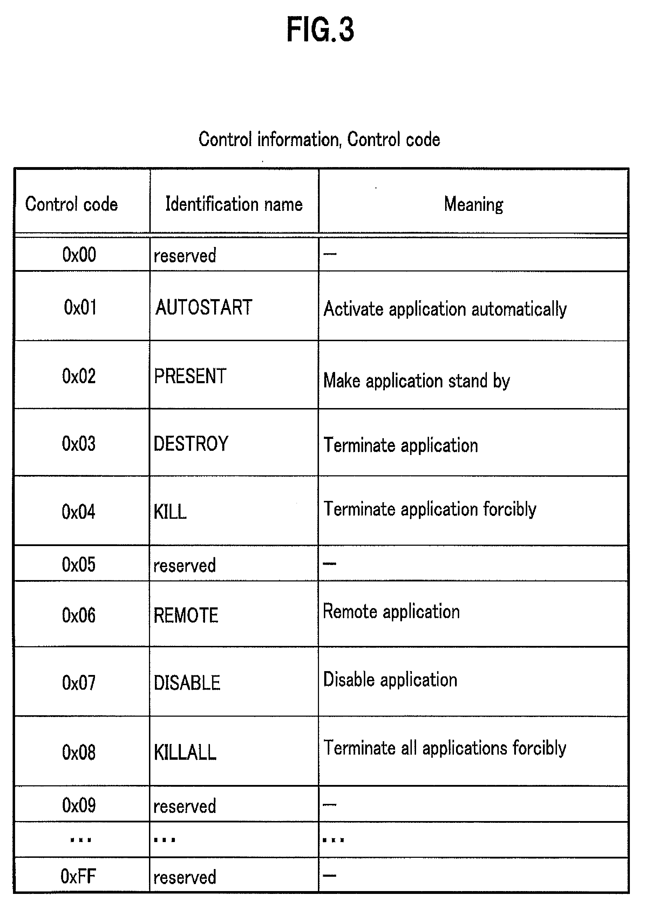

Here, the control information (controlCode at (15)) may have, for example, values shown in FIG. 3. This control information is basically the same as those specified in ARIB STD-B23. For instance, "AUTOSTART" indicates that the application is activated automatically in the integrated broadcasting communications receiver 400 without a user operation. In addition, "PRESENT" indicates that the application is stopped and becomes in a standby state. Further, "DESTROY" and "KILL" are control codes that respectively instruct the application to terminate normally (terminate after confirmation by the user, for example) or forcibly (terminate immediately without confirmation by the user, for example). Thus, the application control codes are basically the same as those specified in ARIB STD-B23, but further added with "KILLALL." This "KILLALL" indicates that all applications that are currently running are forced to be terminated in the integrated broadcasting communications receiver 400, regardless of whether those applications belong to the program channel which has received the application activation information having "KILLALL."

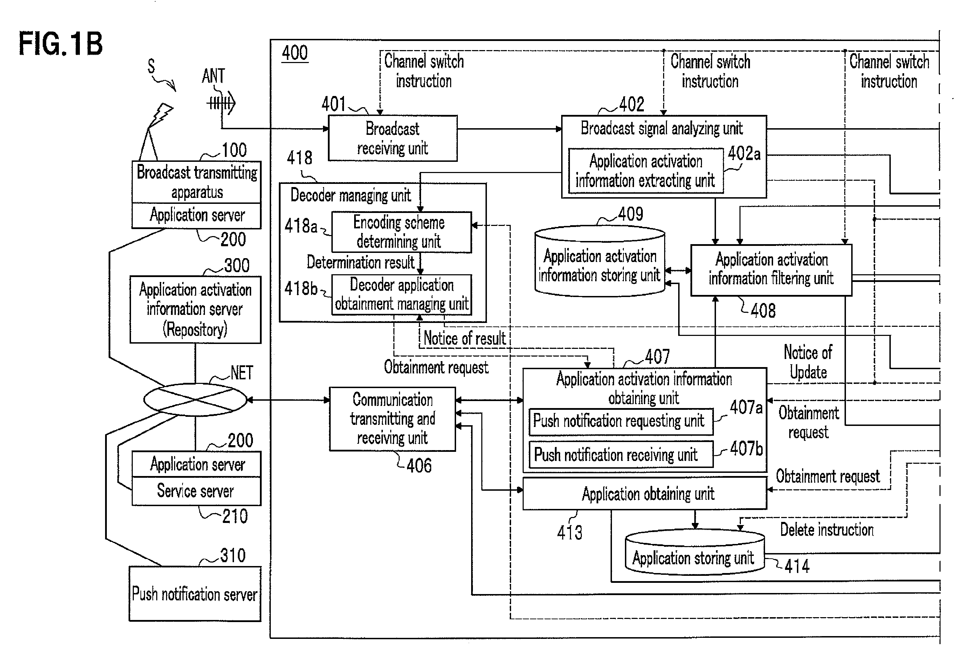

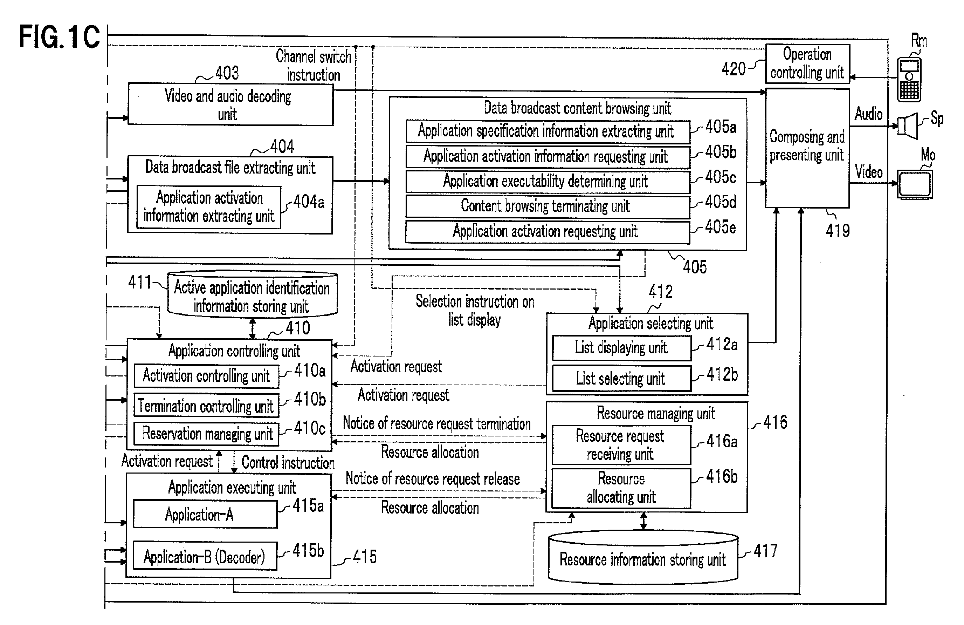

Returning to FIG. 1, for running the application to have the hybrid service provided, the integrated broadcasting communications receiver 400 first obtains the application activation information of applications which are executable (or preparable for execution) when the service needs to be provided. Then, applications to be executed preferably are selected from among the applications included in the application activation information obtained above. Here, the application activation information is obtained, when the associated application is a dependent application coupled with a program channel (service), by extraction from a broadcast signal transmitted by broadcast from the broadcast transmitting apparatus 100 associated with the program channel. Also, when the application is not coupled with a program channel but an independent application which is not associated with any program channels, the integrated broadcasting communications receiver 400 obtains the application activation information via the communications network NET from the application activation information server 300.

### Configuration of Integrated Broadcasting Communications Receiver

Subsequently, a description will be given in detail of the configuration of the integrated broadcasting communications receiver 400, with reference to FIG. 1. The integrated broadcasting communications receiver 400 shown in FIG. 1, according to the embodiment of the present invention, is configured to include a broadcast receiving unit 401, a broadcast signal analyzing unit 402, a video and audio decoding unit 403, a data broadcast file extracting unit 404, a data broadcast content browsing unit 405, a communications transmitting and receiving unit 406, an application activation information obtaining unit 407, an application activation information filtering unit 408, an application activation information storing unit 409, an application controlling unit 410, an active application identification information storing unit 411, an application selecting unit 412, an application obtaining unit 413, an application storing unit 414, an application executing unit 415, a resource managing unit 416, a resource information storing unit 417, a decoder managing unit 418, a composing and presenting unit 419, and an operation controlling unit 420.

The broadcast receiving unit 401 is a tuner that receives via an antenna ANT a broadcast signal transmitted by broadcast waves from the broadcast transmitting apparatus 100. The broadcast receiving unit 401 receives a broadcast signal tuned in according an instruction to switch a program channel, inputted from a remote controller device Rm via the operation controlling unit 420. The broadcast receiving unit 401 demodulates the broadcast signal received, and performs an error correction and a decoding of signals such as TMCC (Transmission and Multiplexing Configuration Control), then outputs the result to the broadcast signal analyzing unit 402 as an MPEG-2 Transport Stream (TS). Note that the broadcast receiving unit 401 may be the one that also receives a cable broadcast or a broadcast via the communications network NET, in addition to a broadcast by radio waves such as terrestrial digital broadcasting and satellite broadcasting.

The broadcast signal analyzing unit 402 is intended to analyze PSI/SI (Program Specific Information/Service Information) in a stream of the demodulated data (transport stream) inputted from the broadcast receiving unit 401, and separate data associated with the program channel that is currently tuned in, such as video, audio, and data. The broadcast signal analyzing unit 402 outputs the separated video signal and audio signal to the video and audio decoding unit 403, and outputs a signal for the data broadcast to the data broadcast file extracting unit 404. In addition, the broadcast signal analyzing unit 402 analyzes header information of the video signal of the broadcast content included in the broadcast signal, and outputs information indicating an encoding scheme of the video to an encoding scheme determining unit 418a.

Further, the broadcast signal analyzing unit 402 includes an application activation information extracting unit 402a that extracts application activation information from the broadcast signal having various signals multiplexed, and stores the extracted application activation information in the application activation information storing unit 409 via the application activation information filtering unit 408, by associating with the program channel from which this application activation information has been extracted. Furthermore, when extracting application activation information from the broadcast signal, the application activation information extracting unit 402a outputs a notice of update for the application activation information to the application controlling unit 410. Note that the application activation information is multiplexed with the broadcast signal, for example, as a dedicated ES (Elementary Stream) or arranged in an EIT (Event Information Table).

The video and audio decoding unit 403 decodes the video and audio signals of an encoded broadcast content, inputted from the broadcast signal analyzing unit 402, and outputs the decoded video and audio signals to the composing and presenting unit 419.

The data broadcast file extracting unit 404 extracts a data broadcast file from data of the data broadcasting transmitted in DSM-CC (Digital Storage Media Command and Control) data carousel format, inputted from the broadcast signal analyzing unit 402, and outputs data such as BML (Broadcast Markup Language) documents and image data, which constitutes the data broadcast content contained in the extracted data broadcast file, to the data broadcast content browsing unit 405. In addition, the data broadcast file extracting unit 404 includes an application activation information extracting unit 404a that extracts the application activation information contained in the data broadcast file, and stores the extracted application activation information in the application activation information storing unit 409 via the application activation information filtering unit 408, by associating with the program channel from which this application activation information has been extracted. Further, when extracting the application activation information from the data broadcast file, the application activation information extracting unit 404a outputs a notice of update of the application activation information to the application controlling unit 410.

It should be noted that the present embodiment uses, as a method to obtain the application activation information via the broadcast waves, a combination of the method of extracting the application activation information by the application activation information extracting unit 404a from the data broadcast file transmitted in data carousel format, and the method of extracting the application activation information contained in the ES or EIT described above by the application activation information extracting unit 402a, but it is not limited thereto. For example, it may be ruled to use only one method as the integrated broadcasting communications system, or the integrated broadcasting communications receiver 400 may accommodate both methods and select a transmission with either one of the methods for each broadcaster.

The data broadcast content browsing unit 405 is a BML browser for viewing the data broadcast contents, which is inputted from the data broadcasting file extracting unit 404 and written in BML format. The data broadcast content browsing unit 405 converts the data broadcast contents to a video signal and an audio signal, and outputs the result to the composing and presenting unit 419.

In addition, the data broadcast content browsing unit 405 includes an application specification information extracting unit 405a, an application activation information requesting unit 405b, an application executability determining unit 405c, a content browsing terminating unit 405d, and an application activation requesting unit 405e. These units are intended, when the BML document constituting the data broadcast contents contains information specifying an application for the hybrid service, to determine whether or not this application is executable and, if executable, to terminate the presentation of the data broadcast contents in response to the instruction by the user, and to transition directly to the hybrid service.

The application specification information extracting unit 405a extracts specification information of an application for the hybrid service from the BML document, and outputs the extracted application specification information to the application executability determining unit 405c.

The application activation information requesting unit 405b obtains application control information stored in the application activation information storing unit via the application activation information filtering unit 408, and outputs it to the application executability determining unit 405c.

The application executability determining unit 405c confirms whether application activation information associated with the application specified by the application specification information received from the application specification information extracting unit 405a is present in the application activation information inputted from the application activation information requesting unit 405b, then if the application activation information is present, this application is determined as executable while determined as not executable if it is not. The application executability determining unit 405c outputs the determination result to the content browsing terminating unit 405d and the application activation requesting unit 405e.

The content browsing terminating unit 405d is a unit to terminate the viewing of the data broadcast contents, when the determination result inputted from the application executability determining unit 405c is executable.

The application activation requesting unit 405e is a unit to request the application controlling unit 410 to start the application specified in the specification information which the application specification information extracting unit 405a has extracted, when the determination result inputted from the application executability determining unit 405c is executable.

It should be noted that, when the application executability determining unit 405c determines that the application is not executable, the integrated broadcasting communications receiver 400 continues the presentation of the data broadcast service by the data broadcasting content browsing unit 405.

The communications transmitting and receiving unit 406 is a communications unit to be connected via the communications network NET with the application server 200, the service server 210, the application activation information server 300, and the push notification server 310. The communications transmitting and receiving unit 406 transmits application activation information and an application obtaining request, respectively from the application activation information obtaining unit 407 and the application obtaining unit 413, to the application activation information server 300, the push notification server 310, and the application server 200 via the communications network NET, then receives the application activation information and the application from these servers, and outputs those received to the application activation information obtaining unit 407 and the application obtaining unit 413 which have made the request. In addition, the communications transmitting and receiving unit 406 receives contents to be presented by the application executing unit 415 via the communications network NET from the service server 210 that transmits the contents for the hybrid service, and outputs the contents received to the application executing unit 415.

The application activation information obtaining unit 407 inputs a request from the application controlling unit 410 and the decoder application obtainment managing unit 418b to obtain application activation information, and obtains application activation information via the communications transmitting and receiving unit 406 from the application activation information server 300 and the push notification server 310, which are connected to the communications network NET. The application activation information obtained is associated with the program channel or a virtual channel that will be described later, then stored in the application activation information storing unit 409 via the application activation information filtering unit 408. In addition, upon obtaining the application activation information, the application activation information obtaining unit 407 outputs a notice of update of the application activation information to the application controlling unit 410, and output the notice about the result of obtaining the application activation information to the decoder application obtainment managing unit 418b.

Further, the application activation information obtaining unit 407 includes a push notification requesting unit 407a and a push notification receiving unit 407b. These units are intended to receive a "push notification about application activation information", which means that the push notification server 310 has transmitted application activation information to the integrated broadcasting communications receiver 400 via the communications network NET at a timing that has not been prepared in advance, then activate or terminate the application dynamically.

The push notification requesting unit 407a requests a push notification for a specific service, via the communications transmitting and receiving unit 406, from the push notification server 310, according to an instruction (not shown) inputted via the operation controlling unit 420 due to an operation of the remote controller Rm by the user. Also, the push notification receiving unit 407b receives the application activation information transmitted from the push notification server 310 via the communications transmitting and receiving unit 406, and stores the received application activation information in the application activation information storage unit 409 via the application activation information filtering unit 408, by associating with the program channel or the virtual channel. In addition, upon obtaining the application activation information, the push notification receiving unit 407b outputs a notice of update of the application activation information to the application controlling unit 410.

Here, the push notification server 310 registers the integrated broadcasting communications receiver 400 that has requested the push notification, and when the application activation information belonging to the subject program channel (service) is updated, transmits the updated application activation information to the integrated broadcasting communications receiver 400 that has been registered before the update. It should be noted that the push notification server 310 may be configured so as to notify the integrated broadcasting communications receiver 400 of a notice that the application activation information has been updated, instead of the application activation information, then the integrated broadcasting communications receiver 400 may receive this notice of update by the application activation information obtaining unit 407, and obtain the application activation information from the application activation information server 300.

In the present embodiment, the application activation information filtering unit 408 filters only the application activation information associated with the program channel, in which the broadcast receiving unit 401 is tuned, and the application activation information associated with the virtual channel, from among the application activation information obtained by the application activation information extracting unit 402a, the application activation information extracting unit 404a, and the application activation information obtaining unit 407, then stores in the application activation information storing unit 409. In addition, the application activation information filtering unit 408 outputs all the application activation information stored in the application activation information storing unit 409, as those associated with the executable (or preparable for execution) applications, to the data broadcast content browsing unit 405, the application selecting unit 412, and the application controlling unit 410.

Here, a virtual channel means a program channel that is virtually defined in order to associate with an application which is not associated with any real program channel, that is, an independent application which does not belong to a real program channel. Whether an application is independent or dependent can be found by referring to dependency information "serviceBound at (17)" (see FIG. 2) which is included in the application activation information and indicates a dependency on a program channel (service). If the dependency information is "true," the application is a dependent application which is coupled with a program channel, and if the dependency information is "false," the application is an independent application which is not coupled with a program channel.

In addition, the virtual channel may use a value (e.g., D999), which is defined and associated with the virtual channel in advance, where there is no program channel having that value.

Referring to the dependency information included in the application activation information and, if the dependency information is "true," the application activation information filtering unit 408 assumes that the application is a dependent application coupled with a program channel, and stores the application activation information in the application activation information storing unit 409, by associating with the program channel (e.g., D001) for which the application activation information has been obtained. On the other hand, if the dependency information is "false," the application activation information filtering unit 408 assumes that the application is an independent application which cannot be coupled with a program channel, and stores the application activation information in the application activation information storing unit 409, by associating with the virtual channel (e.g., D999).

By managing an independent application in this manner, in association with the virtual channel, the integrated broadcasting communications receiver 400 is capable of managing the independent application in the same way as the dependent application that belongs to the program channel, with a simplified configuration.

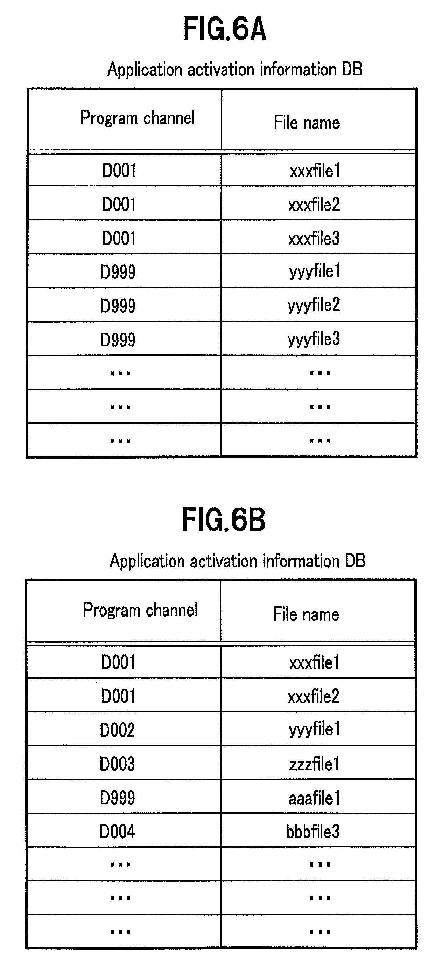

The application activation information storing unit 409 is a storage unit for storing application activation information that controls the operation of the application, by associating with the program channel. FIG. 6A shows a configuration of the application activation information DB (Data Base) stored in the application activation information storing unit 409. The application activation information DB, shown in FIG. 6A, stores only those application activation information files associated with the program channel in which the broadcast receiving unit 401 is tuned ("D001," in this example) and those application activation information files associated with the virtual channel ("D999," in this example).

The application controlling unit (application management and execution controlling unit) 410 is a unit for controlling the life cycle of an application, including the activation and termination of an application. The application controlling unit 410 includes an activation controlling unit 410a, a termination controlling unit 410b, and a reservation managing unit 410c to perform the life cycle control of the application using these units.

The start controlling unit 410a is a unit for controlling the activation of the application. The activation controlling unit 410a inputs the application activation request from the data broadcast content browsing unit 405, the application selecting unit 412, the application executing unit 415, and the decoder application obtainment managing unit 418b, inputs the switching instruction information of the program channel from the operation controlling unit 420, and inputs the notice of update for the application activation information from the application activation information extracting unit 402a, the application activation information extracting unit 404a, and the application activation information obtaining unit 407.

When activating an application in response to one of these inputs, the activation controlling unit 410a inputs the application activation information from the application activation information storing unit 409 via the application activation information filtering unit 408, then requests the application obtaining unit 413 for obtaining the application (program), along with the access point information of the application (location at (29), see FIG. 2) contained in the application activation information inputted above. Note that the activation controlling unit 410a outputs the application obtaining request to the application obtaining unit 413, by including information instructing a reservation state of the application to be obtained. Here, the information instructing the reservation state is intended to be included in the activation request inputted from the application selecting unit 412.

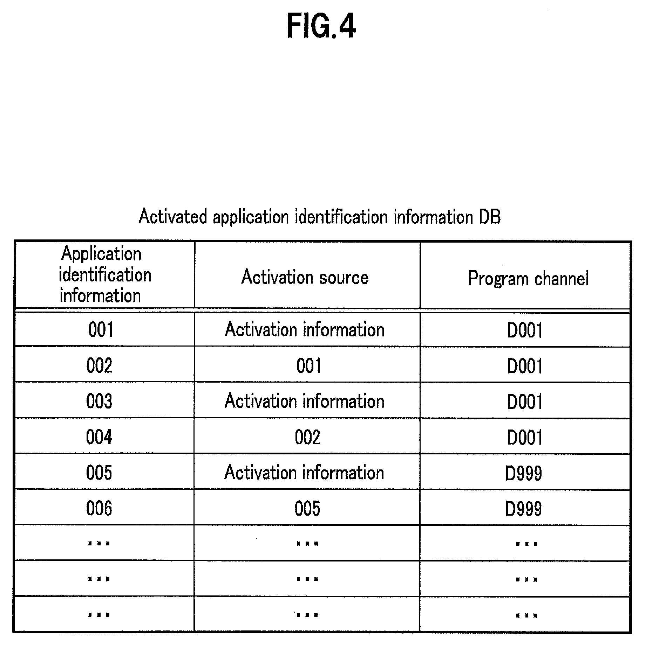

In addition, the activation controlling unit 410a requests one or more resources, which are required for the application to start, from the resource managing unit 416 to have one or more resources allocated. Then, the activation control unit 410a outputs an application activation instruction to the application executing unit 415 to activate the application. Further, the activation controlling unit 410a performs an update to add information about the application that has been activated to the activated-application identification information DB (database) (see FIG. 4), which is stored in the activated-application identification information storing unit 411 and will be discussed later.

The termination controlling unit 410b is a unit for controlling the termination of the application being executed. The termination controlling unit 410b inputs information of the program channel switch instruction from the operation controlling unit 420, and inputs a notice of update for the application activation information from the application activation information extracting unit 402a, the application activation information extracting unit 404a, and the application activation information obtaining unit 407.

When terminating the active application in response to one of these inputs, the termination controlling unit 410b outputs a control command for instructing a termination of the application to the application executing unit 415, then outputs a notice of application termination to the resource managing unit 416. In addition, when terminating the application, the termination controlling unit 410b terminates other applications activated by the terminating application, with reference to the activated-application identification information DB (see FIG. 4) stored in the activated-application identification information storing unit 411. Further, the termination controlling unit 410b performs an update to delete the activated-application identification information about the terminated application from the activated-application identification information DB stored in the activated-application identification information storing unit 411.

The reservation managing unit 410c manages the reservation state of the application, according to information of the reservation state instruction that instructs a reservation state whether the application included in the activation request inputted from the application selecting unit 412 is to be executed immediately (on-the-fly) or to be stored (installed). Here, according to information of the reservation state instruction that is included in the application obtaining request outputted to the application obtaining unit 413 from the activation controlling unit 410a, the application obtaining unit 413 stores (reserves) the obtained application in the application storing unit 414, if the information of the reservation state instruction is "install." In addition, if the information of the reservation state instruction is "install," the reservation managing unit 410c rewrites the access point information (location at (29), see FIG. 2) of the application, in the application activation information which is stored in the application activation information storing unit 409 and associated with the reserved application, with a location in the integrated broadcast communications receiver 400 where the file is saved, for example, such as file:\\\aaa\bbb.jar. This will allow the application obtaining unit 413 to retrieve the application from the application storing unit 414 for outputting it to the application executing unit 415, when activating the installed application next time.

Further, for example, when the application stored in the application storing unit 414 has not been used for more than a predetermined period of time or when there is a delete instruction by the user for installing a new application, the reservation managing unit 410c may delete the application from the application storing unit 414. This will allow the application storing unit 414 to dispose of unnecessary applications.

The activated-application identification information storing unit 411 is a unit to store information indicating the state of an application, which has been activated by the application controlling unit 410, in the activated-application identification information DB (database ), which is a database in association with the applications. FIG.4 shows an example of the configuration of the activated-application identification information DB. As shown in FIG. 4, the activated-application identification information is configured to include "application identification information" that is identification information for identifying the application, "activation source" that is information for identifying the activation source of the application, and "program channel" that is information for identifying the program channel associated with the application.

The "application identification information" is information to uniquely identify the application, and can be configured with: an "orgId at (11)" (organization identification) (see FIG. 2) that shows the organization, which has developed the application to meet the ARIB STD-B23 standard, and an "appId at (12) (application identification)" (see FIG. 2) that identifies the application in the organization; an "object_id (object identifier)" that identifies the object of an application activated in the integrated broadcasting communications receiver 400. Note that, if the activated application can be uniquely identified in the integrated broadcasting communications receiver 400, one or more of the identification information described above may be used as the application identification information.

When the application is activated based on the control information (controlCode at (15), see FIG. 2) included in the application activation information obtained by broadcast or communication, the application activation information is said to be the "activation source" of the application and "activation information" is stored under the "activation source" information. In addition, when the application is started based on the activation request from another application, the application (parent application) which has issued an activation request is said to be the "activation source" and its application identification information is stored.

The "program channel" is stored with information that identifies the program channel (D001) for a dependent application coupled with the program channel. While it is stored with information that identifies the virtual channel (D999) for an independent application that is not coupled with a program channel.

It should be noted that, when the activation controlling unit 410a described above has activated an application, the information about the activated application is added to the activated-application identification information DB stored in the activated-application identification information storing unit 411. Also, when the termination controlling unit 410b has terminated an application, the information about the terminated application is deleted from the activated-application identification information DB stored in the activated-application identification information storing unit 411.

The application selecting unit 412 is a unit to follow an instruction due to the operation of the remote controller Rm by the user inputted via the operation controlling unit 420, to present a list of applications that are executable or preparable for execution, and further to select an application to execute, then it is what is called an application launcher. The application selecting unit 412 includes a list displaying unit 412a and a list selecting unit 412b.

Upon inputting an instruction for displaying a list of executable applications, via the operation controlling unit 420, due to the operation of the remote controller Rm by the user, the list displaying unit 412a inputs the application activation information stored in the application activation information storing unit 409 via the application activation information selecting unit 408, then displays a list of applications included in the inputted application activation information on a monitor Mo via a composing and presenting unit 419.

According to the application selection instruction inputted via the operation controlling unit 420 due to the operation of the remote controller Rm by the user, the list selecting unit 412b outputs a request for activating an application, which has been selected by an instruction, for the application controlling unit 410. Note that when displaying the list of independent applications that are not associated with program channels, the application list selecting unit 412b may allow the user to select whether to execute the application immediately without reserving it in the application storing unit 414 (on-the-fly) or to reserve it in the application storing unit 414 (install). In this case, the list selecting unit 412b may provide a check box, for example, on the display list of applications, for selecting whether to be executed immediately or to be reserved. Alternatively, the list selecting unit 412b may question the user at the stage when the application is selected. This information of the reservation state instruction, which is information indicating whether the application is to be executed immediately or to be reserved, is assumed to be outputted to the application controlling unit 410, with the activation request for the selected application.

The application obtaining unit 413 inputs a request for obtaining an application from the application controlling unit 410, obtains the requested application from the access point specified in the access point information (location at (29)) included in the application activation information associated with the application, then outputs the obtained application to the application executing unit 415, on-the-fly or via the application storing unit 414. The application obtaining unit 413 stores (reserves) the obtained application in the application storing unit 414, when the information of the reservation state instruction instructing "install" is included in the request for obtaining the application from the application controlling unit 410, while outputs the obtained application to the application executing unit 415 directly without storing it in the application storing unit 414, when the information of the reservation state instruction instructing "on-the-fly (immediate execution)" is included.

The application storing unit 414 is a storing unit for reserving an application inputted from the application obtaining unit 413. In addition, the application stored in the application storing unit 414 is deleted according to the delete instruction from the reservation managing unit 410c of the application controlling unit 410.

According to the control instruction, indicating activation of the application, from the activation controlling unit 410a of application controlling unit 410, the application executing unit 415 inputs an application from the application obtaining unit 413 or the application storing unit 414, and loads and executes the inputted application (program) in the memory area that has been allocated by the resource managing unit 416. In addition, the application executing unit 415 terminates the application according to the control instruction, indicating the termination of the application, from the termination controlling unit 410b of the application controlling unit 410.

Further, the application executing unit 415 may execute multiple applications, such as an application-A 415a and an application-B 415b, in parallel, for example, as shown in FIG. 1. The applications under execution input and output signals to/from the respective units of the integrated broadcasting communications receiver 400, depending on the respective features. For example, the application-B 415b works as a decoder in the integrated broadcasting communications receiver 400 to input an encoded video signal (not shown) from the broadcast signal analyzing unit 402, in place of the video and audio decoding unit 403, and to output the decoded video signal to the composing and presenting unit 419.

Thus, executing various applications by the application executing unit 415 can add features to the integrated broadcasting communications receiver 400.

In addition, each application (415a, 415b) being executed by the application executing unit 415 outputs a resource request to the resource managing unit 416 as required to have one or more resources allocated, then outputs a notice of resource release to the resource managing unit 416 when the allocated one or more resources become unnecessary.

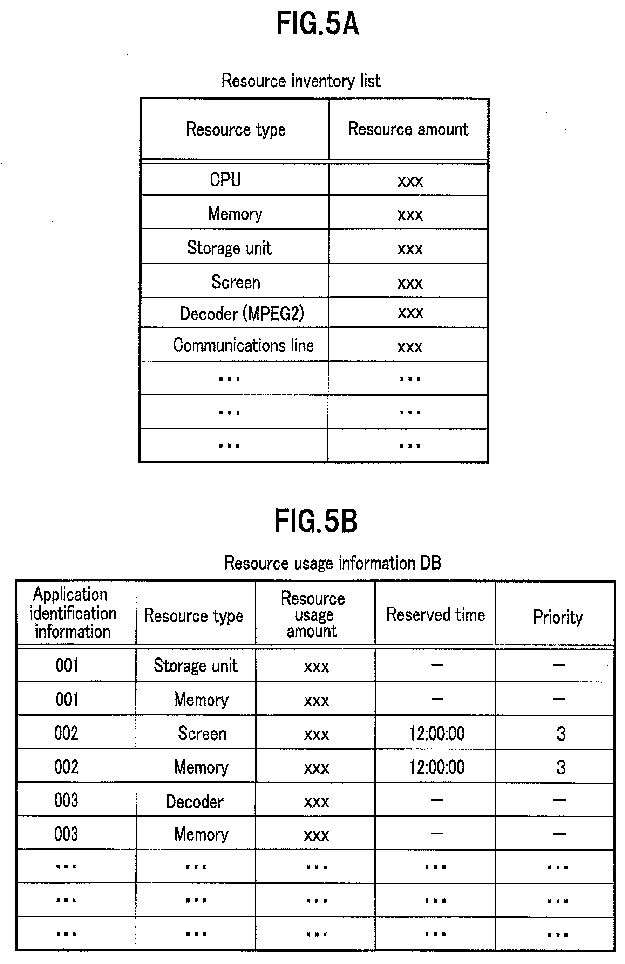

The resource managing unit 416 is a resource manager for managing the allocation of resources, in response to a resource request from the application controlling unit 410 and the application executing unit 415 (application-A 415a, application-B 415b) for allocating one or more resources required to execute the application. The resource managing unit 416 includes a resource request receiving unit 416a and a resource allocating unit 416b. In addition, the resource managing unit 416 inputs a query request from the encoding scheme determining unit 418a of the decoder managing unit 418, whether the decoder (resource) required for decoding contents is included in a resource inventory list (see FIG. 5A) stored in the resource information storing unit 417, and outputs a query result to the encoding scheme determining unit 418a.

The resource request receiving unit 416a inputs a resource request from the application controlling unit 410 and the application executing unit 415 (application-A 415a, application-B 415b), and outputs the contents of the resource request (application identification information, resource type, resource amount, time reservation, and so on) to the resource allocating unit 416b. In addition, when the resource allocating unit 416b does not grant a resource request, the resource request receiving unit 416a outputs the disallowance notice to the requester such as the application controlling unit 410, and when the resource allocating unit 416b changes the reservation state of the resource request registered with a time reservation, the resource request receiving unit 416a outputs a reservation state change notice to the requester, such as the application controlling unit 410, whose reservation state has been changed. Further, the resource request receiving unit 416a inputs a notice of application termination from the application controlling unit 410, inputs a notice of resource release from the application executing unit 415 (application-A 415a, application-B 415b), and outputs the contents of the notice (application identification information, resource type, resource amount, and so on) to the resource allocating unit 416b.

The resource allocating unit 416b is a unit for inputting the contents of the resource request from the resource request receiving unit 416a, determining whether the resource request inputted by the resource request receiving unit 416a is granted, based on the resource inventory list (see FIG. 5A) and a resource usage information DB (database) (see FIG. 5B) that are stored in the resource information storing unit 417 and described later, and allocating one or more resources. When granting the resource request and allocating one or more resources, the resource allocating unit 416b performs an update to register information about usage of the allocated resource (see FIG. 5B) in a resource usage information DB stored in the resource information storing unit 417.

In addition, when inputting a resource request with time reservation from the resource request receiving unit 416a, the resource allocating unit 416b registers information about the resource reservation in the resource usage information DB (see FIG. 5B) stored in the resource information storing unit 417, determines at the reserved time whether or not resource allocation is possible, then allocates one or more resources. Note that the determination of resource allocation for a resource request with time reservation may be performed at an appropriate time, instead of the reserved time, during a time from the receiving time of the resource request until the reserved time. For example, the determination may be performed when the resource usage by other application is completed and the resource usage information DB is updated. It should be noted that when the reserved resource has been allocated, the resource allocating unit 416b deletes the reserved time from the information about the resource request with time reservation, which is registered in the resource usage information DB (see FIG. 5B), for the information updated from the resource reservation state to indicate the resource in-use state.

Further, the resource allocating unit 416b modifies the reservation state of the resource request that has been registered with a time reservation, then grants a resource request from an application having a higher execution priority and performs resource allocation. Note that to modify the reservation state means "to cancel the reservation", "to delay the reserved time" or the like.

Furthermore, the resource allocating unit 416b inputs the content of the application termination notification and the contents of the resource release notification, from the resource request receiving unit 416a, and performs an update to delete the information about the resource to be released from the resource usage information DB (see FIG. 5B) stored in the resource information storing unit 417.

The resource information storing unit 417 stores, as resource information, the resource inventory list that lists resources owned by the integrated broadcasting communications receiver 400 and managed by the resource managing unit 416, and the resource usage information DB (database) that indicates the usage state of resources used by respective applications. The resource information stored in the resource information storing unit 417 is referred to and updated by the resource managing unit 416.

FIG. 5 shows a configuration example of the resource information. FIG. 5A is a configuration example of the resource inventory list, which includes a resource type, and a resource amount indicating a total amount of each resource. FIG. 5B is a configuration example of the resource usage information DB, which includes a resource type, resource usage amount, and an application execution priority, as the resource usage information associated with the application (application identification information) that uses the resource, and when the resource request from an application is "resource request with time reservation", the usage start time is included as a "reserved time". Note that the value set for the priority information (priority at (18), see FIG. 2) included in the application activation information may be used as the application execution priority.

Returning to FIG. 1, the decoder managing unit (insufficient resource managing unit) 418 is a unit to determine whether or not a necessary resource is sufficient either for presenting the broadcast contents distributed by broadcast and/or the contents delivered via communications, or for executing an application, and, when it is insufficient, to obtain and activate an application that complements the insufficient resource. The example shown in FIGS. 1A-1C is provided with the decoder managing unit 418 that manages whether or not the decoders, one of the resources, are sufficient.

The decoder managing unit 418 is provided with the encoding scheme determining unit 418a and the decoder application obtainment managing unit 418b, and is an insufficient resource managing unit that manages shortage of a resource of a decoder, by determining whether or not the decoder provided in the video and audio decoding unit 403 of the integrated broadcasting communications receiver 400 can decode the encoded video signal included in the broadcast content, and, when it cannot decode, by obtaining and executing an application that works as a decoder for decoding the encoded video signal.

The encoding scheme determining unit (insufficient resource determining unit) 418a is an insufficient resource determining unit for inputting the information about the encoding scheme of the video signal of the broadcast content included in the broadcast signal from the broadcast signal analyzing unit 402, and for determining whether or not the decoder, which is a resource required for decoding the video signal, is one of the insufficient resources which the integrated broadcasting communications receiver 400 does not own.

Here, the required decoder can be found, for example, in the encoding scheme detected by referring to the header information of the program content included in the broadcast signal. The encoding scheme determining unit 418a outputs a query request to the resource managing unit 416 whether or not the integrated broadcasting communications receiver 400 owns the required decoder, and inputs the query result from the resource managing unit 416. Note that the resource managing unit 416 determines whether or not the receiver owns the decoder, depending on whether the decoder, for which the query request has been made, is included in the resource inventory list stored in the resource information storing unit 417.

The encoding scheme determining unit 418a determines that the decoder (resource) is an insufficient resource, if the query result about the required decoder inputted from the resource managing unit 416 has been "not owned," while determines that the decoder (resource) is not an insufficient resource, if the query result has been "owned," then outputs the determination result to the decoder application obtainment controlling unit 418b.

It should be noted that the present embodiment is configured to determine the encoding scheme of the video signal included in the broadcast content, but can also be configured to determine the encoding scheme of the video signal, the audio signal, or the like included in the content that is obtained via the communications transmitting and receiving unit 406. For the content that is obtained via the communications transmitting and receiving unit 406, the encoding scheme can be determined, for example, by using the description with MIME (Multipurpose Internet Mail Extension) type, in addition to referring to the header information of the content file obtained. That is, by referring to the extension of the content file, the type of the decoder, which is a resource for decoding the content associated with this extension, can be obtained.

The decoder application obtainment managing unit (complementary application obtainment managing unit) 418b is a complementary application obtainment managing unit for inputting the determination result from the encoding scheme determining unit 418a whether the required decoder is an insufficient resource, and when it is an insufficient resource, for managing the obtainment of the decoder application (complementary application) that is an application having a feature of the decoder, which is determined to be an insufficient resource. The decoder application obtainment managing unit 418b requests the application activation information obtaining unit 407 for obtaining the application activation information, and inputs the notice of the result from the application activation information obtaining unit 407 for the request for obtaining the application activation information. In addition, the decoder application obtainment managing unit 418b requests the application controlling unit 410 for activating the decoder application.

It should be noted that the decoder managing unit 418 may be configured as hardware, executed as a resident application that resides in the integrated broadcasting communications receiver 400, or executed as an independent application associated with the virtual channel in the hybrid service.

In addition, as the insufficient resource managing unit for managing insufficient resources, the present embodiment is provided with the decoder managing unit 418 for managing decoders, which is one of the resources, but can be configured to obtain and activate a complementary application, to manage the shortage of other resource and to complement the insufficient resource.

The composing and presenting unit 419 is intended to appropriately compose: the video and audio signals of the broadcast content inputted from the video and audio decoding unit 403; the video and audio signals of the data broadcast content inputted from the data broadcast content browsing unit 405; a list of applications inputted from the list displaying unit 412a of the application selecting unit 412; and the video and audio signals inputted from respective applications (415a, 415b), which are being executed by the application executing unit 415, then output the composed video signal to the monitor Mo and the composed audio signal to the speaker Sp, respectively, to present the video and audio.

The operation controlling unit 420 is an input interface for the user to output the operation contents of the remote controller Rm by the user to each unit of the integrated broadcasting communications receiver 400. The operation controlling unit 420 outputs, for example, the instruction signal of program channel switch to the broadcast receiving unit 401, the broadcast signal analyzing unit 402, the application controlling unit 410, and the application activation information filtering unit 408, and outputs the instruction signal of list display, for instructing to display the list of executable applications, and the instruction signal of selection, for the application selected from the displayed list, to the application selecting unit 412.

Hereinabove, a description has been given of the configuration of the integrated broadcasting communications receiver 400, and the respective configurative units of the integrated broadcasting communications receiver 400 may be configured using dedicated hardware, but not limited thereto. For example, the integrated broadcasting communications receiver 400 may be implemented by a general computer system, provided with a tuner for receiving digital broadcast, executing programs and operating a processing device, a storage device, or the like in the computer system. In this case, the integrated broadcasting communications receiver 400 may be implemented by recording a program (digital broadcast receiving program), which implements the functions of the respective units of the integrated broadcasting communications receiver 400a, in a computer-readable recording medium, and by loading and executing this program recorded in the recording medium into a computer system. Note that the "computer system" is intended to include OS (operating system), hardware such as peripheral devices, and the like. In addition, the "computer-readable recording medium" is a portable medium such as a flexible disk, a magnetooptical disk, a ROM, and a CD-ROM, or a storage device such as a hard disk built in the computer system. Furthermore, the "computer-readable recording medium" may include those that retain the program dynamically for a short period of time, such as communications lines when the program is transmitted via a network such as Internet or a communications line such as a telephone line, or those that retain the program for a certain period of time, such as a volatile memory in a computer system serving as a server or client in the above case. Moreover, the program described above may be intended for implementing some of the features described above, and further for implementing the features described above in combination with a program already recorded in the computer system.

### Operation of Integrated Broadcasting Communications System

Next, a description will be given of the operation of the integrated broadcasting communications receiver 400 according to an embodiment of the present invention, with reference to the drawings as appropriate. Note that operation of the obtainment of the application activation information 1 to 4 will be described at first, followed by operations of activation and termination of the application, selection of the application, control of the application at a channel switching time, operation of the decoder managing unit 418, the resource allocation process by the resource managing unit 416, and transition from the data broadcast.

### OBTAINMENT OF APPLICATION ACTIVATION INFORMATION: 1

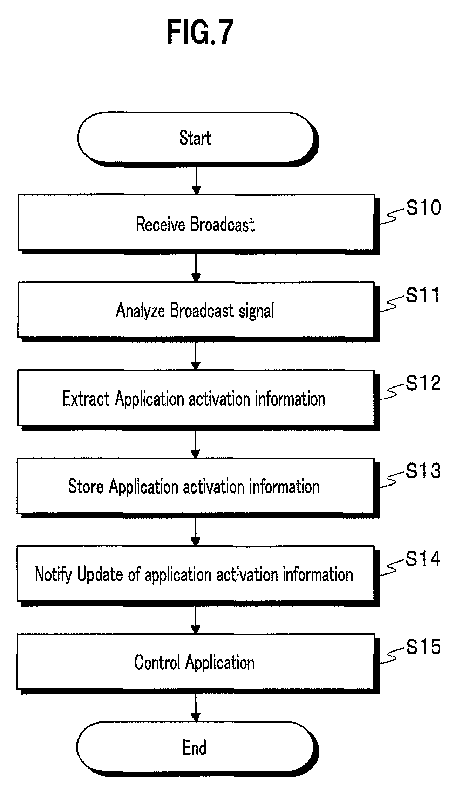

The integrated broadcasting communications receiver 400 according to the present embodiment obtains the application activation information via four paths. First, a description will be given of an operation by the integrated broadcasting communications receiver 400 to obtain the application activation information via a first path, with reference to FIG. 7 (see FIGS. 1A-1C as appropriate). Via the first path, the integrated broadcasting communications receiver 400 extracts the application activation signal from the EIT included in the broadcast signal. Note that the application activation information transmitted by the broadcast is application activation information associated with a dependent application that is an application coupled with a program channel.

The integrated broadcasting communications receiver 400 first receives a broadcast signal of the program channel tuned in, by the broadcast receiving unit 401, via the antenna ANT (step S10). Next, the integrated broadcasting communications receiver 400 analyzes the broadcast signal received by the broadcast receiving unit 401, by the broadcast signal analyzing unit 402 (step S11), separates the data, such as video, audio, and data, which are multiplexed for transmission, and extracts the application activation information included in the EIT, by the application activation information extracting unit 402a (step S12). Then, the integrated broadcasting communications receiver 400 stores the application activation information extracted by the application activation information extracting unit 402a, via the application activation information filtering unit 408, in the application activation information storing unit 409, by associating with the program channel tuned in (step S13).

Here, the application activation information filtering unit 408 is a unit for filtering application activation information, by selecting only the application activation information associated with executable applications and storing in the application activation information storing unit 409. In addition, the integrated broadcasting communications receiver 400 outputs a notice of update to the application controlling unit 410, by the application activation information extracting unit 402a, for notifying that the application activation information has been updated (step S14). Then, the integrated broadcasting communications receiver 400, by the application controlling unit 410 which has inputted the update notification, refers to the application activation information DB (see FIG. 6A) stored in the application activation information storing unit 409, and performs life cycle control such as activation and termination of applications, in accordance with the control information (controlCode at (15), see FIG. 2), the access point information (location at (29), see FIG. 2), and the like (step S15).

It should be noted that the broadcast transmitting apparatus 100 may be provided with a dedicated ES to transmit application activation information, instead of transmitting the application activation information arranged in the EIT, thus the integrated broadcasting communications receiver 400 may extract the application activation information, by the application activation information extracting unit 402a, from the ES included in the broadcast signal received.

### OBTAINMENT OF APPLICATION ACTIVATION INFORMATION: 2

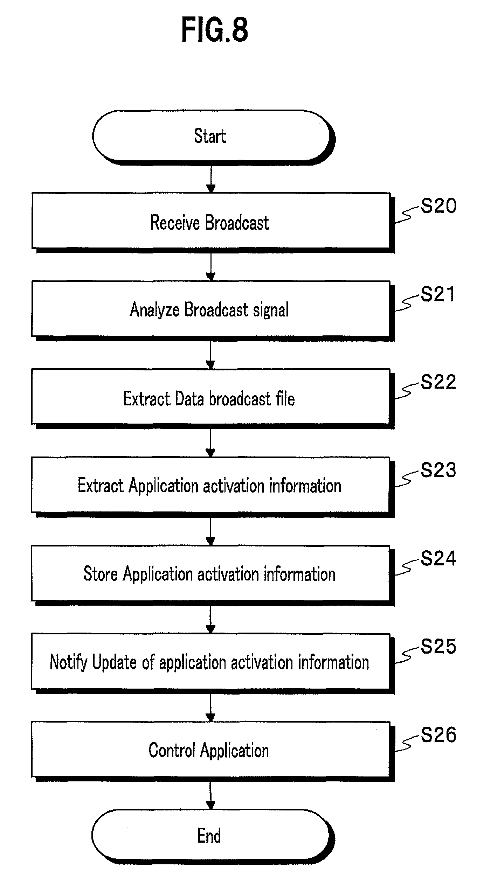

Next, a description will be given of an operation by the integrated broadcasting communications receiver 400 to obtain the application activation information via a second path, with reference to FIG. 8 (see FIGS. 1A-1C as appropriate). Via the second path, the integrated broadcasting communications receiver 400 extracts the application activation signal included in the data broadcast file, which is transmitted in the data carousel. Note that the application activation information transmitted by the data broadcast is, as is the case transmitted via the first path, application activation information associated with a dependent application that is an application coupled with a program channel

The integrated broadcasting communications receiver 400 first receives a broadcast signal of the program channel tuned in, by the broadcast receiving unit 401, via the antenna ANT (step S20). Next, the integrated broadcasting communications receiver 400 analyzes the broadcast signal received by the broadcast receiving unit 401, by the broadcast signal analyzing unit 402 (step S21), separates the data about the data broadcast transmitted in the data carousel from the data, such as video, audio, and data, which are multiplexed for transmission, and extracts the data broadcast file from the separated data, by the data broadcast file extracting unit 404 (step S22).

Then, the integrated broadcasting communications receiver 400 extracts the application activation information, by the application activation information extracting unit 404a, from the data broadcast file extracted by the data broadcast file extracting unit 404 (step S23). The integrated broadcasting communications receiver 400 stores the application activation information extracted by the application activation information extracting unit 404a, via the application activation information filtering unit 408, in the application activation information storing unit 409, by associating with the program channel tuned in (step S24).

Next, the integrated broadcasting communications receiver 400 outputs a notice of update to the application controlling unit 410, by the application activation information extracting unit 404a, for notifying that the application activation information has been updated (step S25). Then, the integrated broadcasting communications receiver 400, by the application controlling unit 410 which has inputted the update notification, refers to the application activation information DB stored in the application activation information storing unit 409, and performs life cycle control such as activation and termination of applications, in accordance with the control information (controlCode at (15), see FIG. 2), the access point information (location at (29), see FIG. 2), and the like (step S26).

### OBTAINMENT OF APPLICATION ACTIVATION INFORMATION: 3

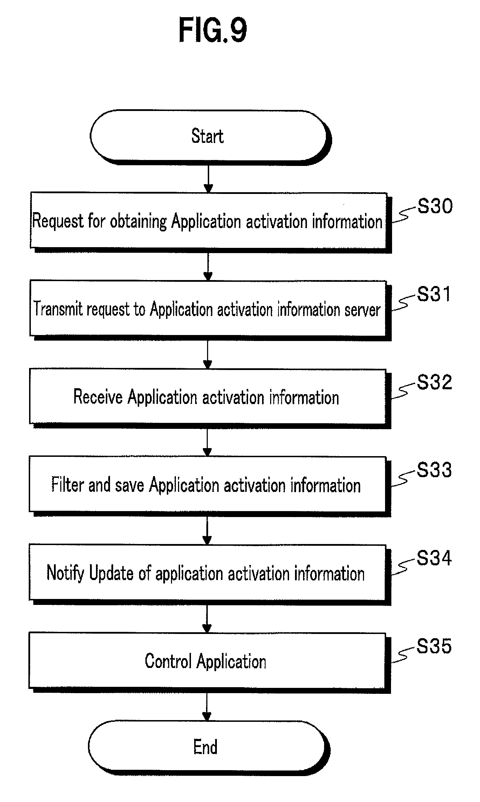

Next, a description will be given of an operation by the integrated broadcasting communications receiver 400 to obtain the application activation information via a third path, with reference to FIG. 9 (see FIGS. 1A-1C as appropriate). Via the third path, the integrated broadcasting communications receiver 400 extracts the application activation signal from the application activation information server 300, which is connected to the communications network NET, via the communications transmitting and receiving unit 406. Note that the application activation information associated with the independent application, which is an application not coupled with a program channel, is not transmitted by broadcast, therefore can be obtained via the third path. It is also possible to obtain the application activation information associated with the dependent applications, which are associated with program channels, via the third path.

When activating an independent application, the integrated broadcasting communications receiver 400 first outputs a request, by the application controlling unit 410, to the application activation information obtaining unit 407 for obtaining the application activation information associated with the application to be activated (step S30).

Here, in a case of activating an independent application, when an instruction of displaying application list is inputted due to the operation of the remote controller Rm by the user, there is a case where the application activation information associated with the independent application is not stored in the application activation information storing unit 409. In this case, the integrated broadcasting communications receiver 400 first obtains a list of executable independent applications, by the application selecting unit 412, from the application activation information server 300 via the communications transmitting and receiving unit 406, then displays the list obtained, by the list displaying unit 412a. Then, when an instruction of selecting the application is inputted due to the operation of the remote controller Rm by the user, an activation request for the selected application is outputted, by the list selecting unit 412b, to the application controlling unit 410. And, by the application controlling unit 410 which has inputted the activation request, a request for obtaining the application activation information associated with the application is outputted to the application activation information obtaining unit 407.

Next, the integrated broadcasting communications receiver 400 transmits a request, by the application activation information obtaining unit 407, to the application activation information server 300, via the communications transmitting and receiving unit 406, for obtaining the application activation information requested from the application controlling unit 410 (step S31). Here, URL (Uniform Resource Locator) indicating the location of the application activation information server 300 is, for example, assumed to be stored in the integrated broadcasting communications receiver 400 in advance, for reference when requested.

The integrated broadcasting communications receiver 400 receives, by the application activation information obtaining unit 407, the application activation information transmitted from the application activation information server 300 for the request transmitted at step S31, via the communications transmitting and receiving unit 406 (step S32), and stores the received application activation information in the application activation information storing unit 409 via the application activation information filtering unit 408, by associating with the associated program channel (step S33).

Next, the integrated broadcasting communications receiver 400 outputs a notice of update to the application controlling unit 410, by the application activation information obtaining unit 407, for notifying that the application activation information has been updated (step S34). Then, the integrated broadcasting communications receiver 400, by the application controlling unit 410 which has inputted the update notification, refers to the application activation information DB (see FIG. 6A) stored in the application activation information storing unit 409, and performs life cycle control such as activation and termination of applications, in accordance with the control information (controlCode at (15), see FIG. 2), the access point information (location at (29), see FIG. 2), and the like (step S35).

In addition, if the dependency information (serviceBound at (17), see FIG. 2), which is included in the application activation information and indicates the dependency on a program channel, is "false," the application activation information is the one associated with the independent application that is not coupled with a program channel. In this case, at step S33, the application activation information is coupled with a virtual channel determined in advance (i.e., D999) and stored in the application activation information storing unit 409 via the application activation information filtering unit 408.

Further, the application activation information associated with the dependent application can be obtained via the first path or the second path, by extraction from the broadcast signal of the associated program channel, but may be also obtained via the third path. When obtaining the application activation information associated with a dependent application from the application activation information server 300 via the communications network NET, that is, when the dependency is "true," so as to include an identification information of the associated program channel in the application activation information, the application activation information that has been obtained may be coupled with the identification information of the program channel associated with the subject application activation information, then stored in the application activation information storing unit 409.

Note that when the application activation information associated with the dependent application is obtained from the application activation information server 300, there may be a case that application activation information associated with a non-tuned program channel is also obtained. In the present embodiment, application activation information associated with a non-tuned program channel is excluded by the filtering by the application activation information filtering unit 408, and not stored in the application storing unit 414. That is, the application activation information storing unit 409 according to the present embodiment only stores application activation information (see FIG. 6A) which is coupled with a program channel tuned in (D001) or a virtual channel (D999) and associated with executable applications in the current tuning state.

### OBTAINMENT OF APPLICATION ACTIVATION INFORMATION: 4

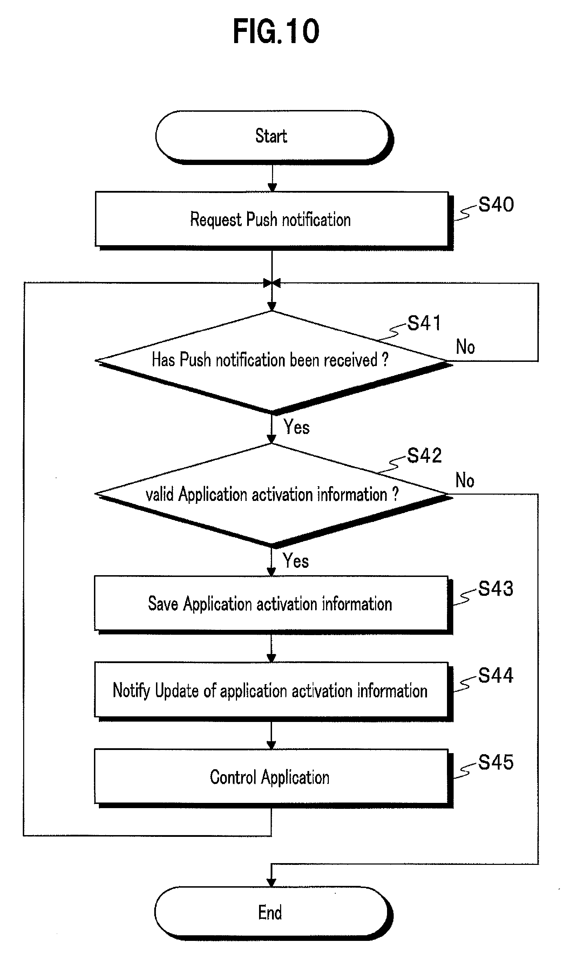

Next , a description will be given of an operation by the integrated broadcasting communications receiver 400 to obtain the application activation information via a fourth path, with reference to FIG. 10 (see FIGS. 1A-1C as appropriate). Via the fourth path, the integrated broadcasting communications receiver 400 extracts the application activation signal from the push notification server 310, which is connected to the communications network NET, via the communications transmitting and receiving unit 406.

The fourth path is a path for a push notification of application activation information to be transmitted to the integrated broadcasting communications receiver 400 at a timing that has not been prepared in advance, via the communications network, from the external push notification server 310 run by the service provider that provides dependent applications coupled with the program channel, then to be obtained by the integrated broadcasting communications receiver 400 for activating or terminating an application dynamically.

The integrated broadcasting communications receiver 400 requests the push notification server 310 in advance, by the push notification requesting unit 407a, via the communications transmitting and receiving unit 406, for a push notification of application activation information (step S40). Note that the URL indicating the location of the push notification server 310 shall be stored in the integrated broadcasting communications receiver 400 in advance, for reference when requested. While not receiving a push notification of application activation information from the push notification server 310 (No at step S41), the integrated broadcasting communications receiver 400 stands by, by the push notification receiving unit 407b, until receiving it. Then, upon receiving a push notification (Yes at step S41), the integrated broadcasting communications receiver 400 determines, by the push notification receiving unit 407b, whether or not the application activation information received is valid (step S42).

Here, the application activation information is not valid, for example, even when receiving the application activation information associated with the program channel that has requested the push notification, the channel has been switched after requesting a push notification at step S40 and the subject program channel is not tuned in now. If it is determined that the application activation information is not valid (No at step S42), the integrated broadcasting communications receiver 400 ignores the application activation information and ends the process. Note that it is assumed, if the channel has been switched, a request for a push notification at step S40 needs to be performed again for a program channel after the change.

On the other hand , if it is determined by the push notification receiving unit 407b that the application activation information is valid (Yes at step S42), the integrated broadcasting communications receiver 400 associates the received application activation information with the program channel, by the push notification receiving unit 407b, and stores it in the application activation information storing unit 409 via the application activation information filtering unit 408, according to the similar procedure to that of the third path (step S43).

Next, the integrated broadcasting communications receiver 400 outputs the update notification to the application controlling unit 410, by the push notification receiving unit 407b, for notifying that the application activation information has been updated (step S44). Then, the integrated broadcasting communications receiver 400, by the application controlling unit 410 which has inputted the update notification, refers to the application activation information DB (see FIG. 6A) stored in the application activation information storing unit 409, and performs life cycle control such as activation and termination of applications, in accordance with the control information (controlCode at (15), see FIG. 2), the access point information (location at (29), see FIG. 2), and the like (step S45).

### ACTIVATION AND TERMINATION OF APPLICATION

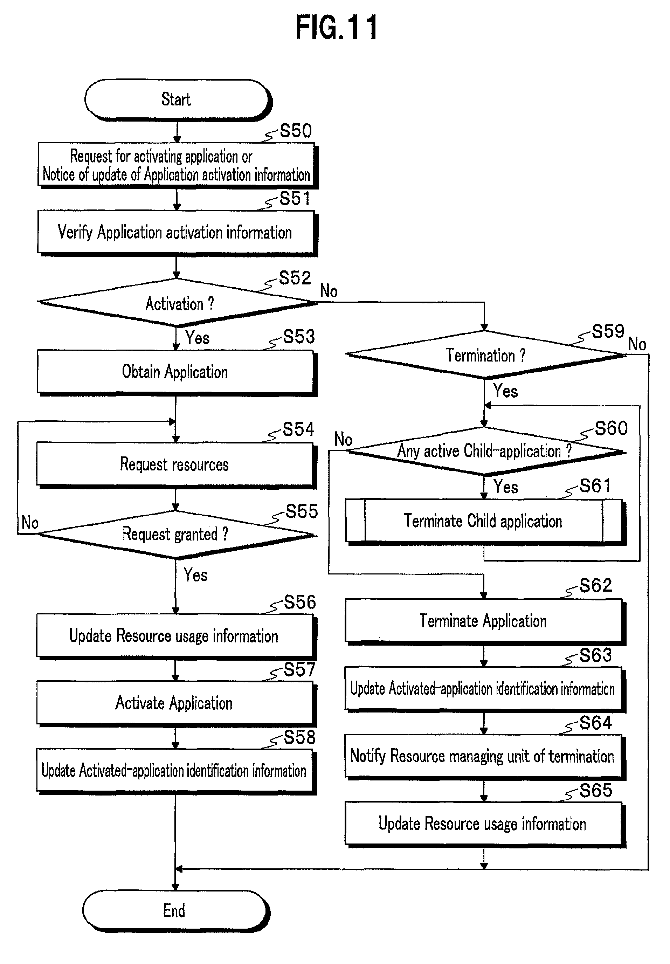

Next, a description will be given of an operation of the integrated broadcasting communications receiver 400 at the activation and termination time of an application, with reference to FIG. 11 (see FIGS. 1A-1C as appropriate).

When the application controlling unit 410 has inputted an application activation request or a notice of update of application activation information (step S50), the integrated broadcasting communications receiver 400 controls the operation of the application, by the application controlling unit 410. Here, the application controlling unit 410 inputs the application activation request from the data broadcast content browsing unit 405, the application selecting unit 412, the application executing unit 415, and the decoder application obtainment managing unit 418b of the decoder managing unit 418, and inputs a notice of update of application activation information from the application activation information extracting unit 402a, the application activation information extracting unit 404a, and the application activation information obtaining unit 407.

When the application controlling unit 410 inputs an application activation request or a notice of update of application activation information at step S50, the integrated broadcasting communications receiver 400 refers to the application activation information stored in the application activation information storing unit 409, by the application controlling unit 410, via the application activation information filtering unit 408. Then, the control information (controlCode at (15), see FIG. 2) included in the application activation information is checked (step S51). Here, when the control information is "AUTOSTART" that indicates activation (Yes at step S52), the integrated broadcasting communications receiver 400 outputs a request, by the activation controlling unit 410a of the application controlling unit 410, to the application obtaining unit 413, for obtaining an application, including the access point information (locator at (29), see FIG. 2), then obtains an application, by the application obtaining unit 413, from the access point specified in the access point information (step S53).

In addition, the integrated broadcasting communications receiver 400 outputs a request, by the activation controlling unit 410a, to the resource managing unit 416, for one or more resources required to execute the application to be activated (step S54). The integrated broadcasting communications receiver 400 receives the resource request which the activation controlling unit 410a has outputted at step S54, by the resource request receiving unit 416a of the resource managing unit, then determines whether the resource request can be granted, by the resource allocating unit 416b (step S55).

Here, the resource allocating unit 416b checks whether the one or more resources are available for allocation to the application that has made the request, with reference to the resource amount (total resource amount) (see FIG. 5A) of the requested resource type in the resource inventory list and the resource usage amount of the resource type (see FIG. 5B) in the resource usage information DB, and rejects the resource request when one or more resources are not available (No at step S55) and notifies the activation controlling unit 410a that it has rejected the resource request, where the resource inventory list and the resource usage information DB are stored in the resource information storing unit 417. The activation controlling unit 410a, which has received the rejection notice, outputs the resource request to the resource managing unit 416 repeatedly until allowed. Note that activation control unit 410a may be configured to terminate the process when the resource request is rejected a predetermined number of times, assuming that the application activation has failed. Also, when there is a need for making a resource request repeatedly until the resource is allocated, the activation controlling unit 410a may be configured to make a resource request with time reservation, which will be described later, then to wait until the resource is allocated.

Alternatively, when granting the resource request (Yes at step S55), the integrated broadcasting communications receiver 400 updates resource usage information, by the resource allocating unit 416b, to register the amount of resources allocated to the application for which the request has been granted in the resource usage information DB (see FIG. 5B) stored in the resource information storing unit 417 (step S56). In addition, upon the resource request being granted by the resource allocating unit 416b and the one or more resources required to start the application being allocated, the activation controlling unit 410a outputs a control instruction to the application executing unit 415 for instructing the application activation to activate the application (step S57).

By this, objects for executing application, such as application-A 415a and application-B 415b, are generated in the application executing unit 415. Upon activating the application, the integrated broadcasting communications receiver 400 adds, by the activation control unit 410a, the activation source of the activated application and the associated program channel in the activated-application identification information DB (see FIG. 4) stored in the activated-application identification information storing unit 411, by associating with the activated applications (application identification information) (step S58).

On the other hand, when the control information contained in the application control information, which the application controlling unit 410 has confirmed, is not intended to instruct "activation" (No at step S52), but found to be "DESTROY" or "KILL" that instructs "termination" (Yes at step S59), the integrated broadcasting communications receiver 400 verifies, by the termination controlling unit 410b of the application controlling unit 410, whether there is any "child application" activated by the application, for which the "termination" has been instructed, with reference to the activated-application identification information (see FIG. 4) stored in the activated-application identification information storing unit 411 (step S60).

Here, whether there is any child application can be determined to see whether there is any application that is recorded to have the subject application as the "activation source" in the activated-application identification information DB (see FIG. 4). For example, in the example shown in FIG. 4, when the application identification information, which is identification information of an application to be terminated, is "001", the application having the application identification information "002" is found to be a child application.

Here, when the application (parent application) to be terminated has a child application, the child application is also terminated. At this time, it is assumed to terminate the parent application after terminating the child application.

Therefore, when the application to be terminated has a child application (Yes at step S60), the integrated broadcasting communications receiver 400 terminates the child application, by the termination controlling unit 410b (step S61). When there are multiple child applications, steps S60 and S61 are executed repeatedly to terminate all child applications before the parent application. A detailed description will be given later of the termination process of child applications.

When all child applications have been terminated to leave no active child application (No at step S60), the integrated broadcasting communications receiver 400 outputs a control signal, by the termination controlling unit 410b, to the application executing unit 415 for instructing the termination, to terminate the parent application (step S62). Upon terminating the application, the integrated broadcasting communications receiver 400 performs an update of the information, by the termination controlling unit 410b, to delete information about the applications, which have been terminated, from the activated-application identification information DB (see FIG. 4) stored in the activated-application identification information storing unit 411 (step S63), then outputs a notice of application termination to the resource managing unit 416 (step S64).

Then, the integrated broadcasting communications receiver 400 performs an update, by the resource managing unit 416, to delete the resource usage information about the one or more resources used by the applications associated with the termination notice inputted from the termination controlling unit 410b, from the resource usage information DB (see FIG. 5B) stored in the resource information storing unit 417 (step S65).

Alternatively, when the content of instruction in the control information for the application is not the termination (No at step 59), that is, when the control over the application is neither activation or termination, the process ends without regard to the application activation information. Note that it is assumed here to perform only activation or termination, but processing in accordance with such control information that instructs stopping or loading may be performed, other than activation and termination.

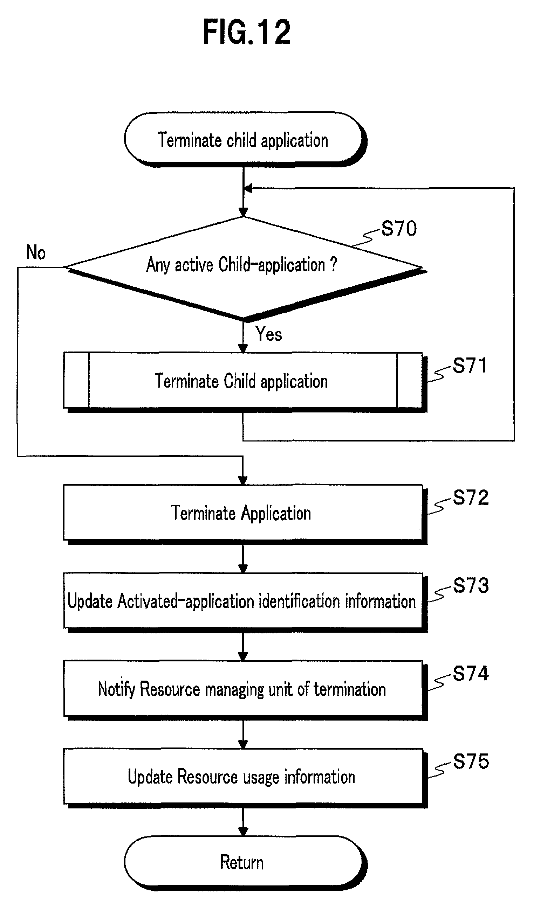

Next, a detailed description will be given of the termination process of the child application in FIG. 11 (step S61), with reference to FIG. 12 (see FIGS. 1A-1C and 11 as appropriate).

When terminating the child application, if there is any application activated by the child application (grandchildren application for the parent application), it is also assumed that the child application is terminated after terminating all child applications for the child application.

First, the integrated broadcasting communications receiver 400 verifies, by the termination controlling unit 410b, whether there is any child application for the child application to be terminated (step S70). This verification method is the same as step S60 in the termination processing of the parent application shown in FIG. 11. In the example shown in FIG. 4, for the application having the application identification information "002," which is a child application for that of the application identification information "001," the application having the application identification information "004" is the child application. Therefore, in order to terminate the application having the application identification information "002," the application having the application identification information "004" needs to be terminated first.

Back to FIG. 12, when the child application to be terminated further has its own child application (Yes at step S70), the integrated broadcasting communications receiver 400 executes step S70 and step S71 repeatedly, by the termination controlling unit 410b, until terminating all child applications for the child application to be terminated. Then, when there is no more child application for the child application running (No at step S70), the integrated broadcasting communications receiver 400 outputs a control signal for instructing termination, by the termination controlling unit 410b, to the application executing unit, to terminate the child application (step S72).

Upon terminating the child application, the integrated broadcasting communications receiver 400 performs an update of the information, by the termination controlling unit 410b, to delete information about the child application, which has been terminated, from the activated-application identification information DB (see FIG. 4) stored in the activated-application identification information storing unit 411 (step S73), then outputs a notice of application termination to the resource managing unit 416 (step S74). The integrated broadcasting communications receiver 400 performs an update, by the resource managing unit 416, to delete the resource usage information about the one or more resources used by the application associated with the termination notice inputted from the termination controlling unit 410b, from the resource usage information DB (see FIG. 5B) stored in the resource information storing unit 417 (step S75).

### SELECTION OF APPLICATION

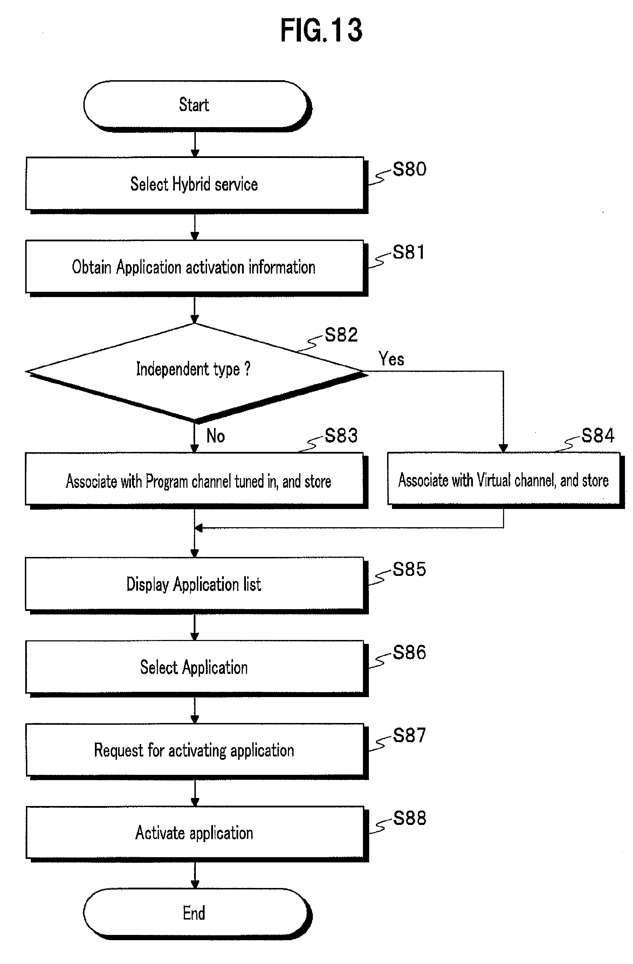

Next, the operation of selection of the application will be described, with reference to FIG. 13 (see FIGS. 1A-1C as appropriate).

Upon a hybrid service being selected due to an operation of the remote controller Rm by the user or the like (step S80), the integrated broadcasting communications receiver 400 first obtains application activation information, by the application activation information extracting unit 402a, the application activation information extracting unit 404a, and the application activation information obtaining unit 407 (step S81).

Next, the integrated broadcasting communications receiver 400 verifies, by the application activation information filtering unit 408, whether the dependency information (serviceBound at (17), see FIG. 2) contained in the application activation information obtained is "true" or "false," and determines, if it is "true," that the application associated with the application activation information is a dependent application that is dependent on a program channel (No at step S82), and stores the application activation information in the application activation information storing unit 409, by coupling with the program channel tuned in (e.g., D001) by the broadcast receiving unit 401 (step S83) (see FIG. 6A).

On the other hand, if dependency information is "false," the integrated broadcasting communications receiver 400 determines, by the application activation information filtering unit 408, that the application associated with the application activation information is an independent application that is not dependent on a program channel (Yes at step S82), and stores the application activation information in the application activation information storing unit 409, by coupling with the predetermined virtual channel (e.g., D999) (step S84) (see FIG. 6A).

It should be noted that the application activation information will be managed in the same way so as to be coupled with a channel (program channel or virtual channel) when it is stored in the application activation information storing unit 409, regardless of whether the associated application is a dependent or independent type.

Next, the integrated broadcasting communications receiver 400 extracts executable applications, by the list displaying unit 412a of the application selecting unit 412, from the application activation information DB (see FIG. 6A) stored in the application activation information storing unit 409 via the application activation information filtering unit 408, to display a list of applications on the monitor Mo via the composing and presenting unit 419 (step S85).

Also at this time, the list can be displayed in the same way, since an application is coupled with a channel (program channel or virtual channel) regardless of whether the application is a dependent or independent type.

Then, upon inputting an instruction of application selection, by the list selecting unit 412b, due to an operation of the remote controller Rm by the user, via the operation controlling unit 420 (step S86), the integrated broadcasting communications receiver 400 requests the application controlling unit 410, by the list selecting unit 412b, for starting the selected application (step S87).

Then, the integrated broadcasting communications receiver 400 outputs a control instruction indicating an activation, by the application controlling unit 410, to the application executing unit 415, to activate the application (step S88).

Note that, when selecting an independent application by the application selecting unit 412, which is an application launcher, for activation, it is assumed that "AUTOSTART " is set in the control information of the application activation information associated with the independent application (controlCode at (15), see FIG. 2). This will enable the application to be started immediately by the application controlling unit 410 when this application is selected.

Thus, by associating an independent application with a virtual channel, an independent application can be managed in the same way as a dependent application.

### CONTROL OF APPLICATION AT CHANNEL SWITCHING TIME

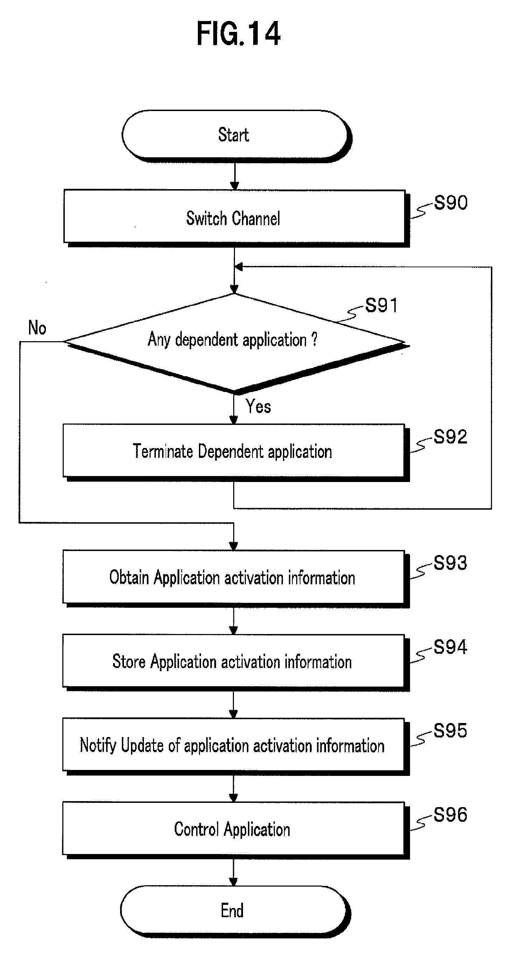

Next, a description will be given of a control of an application at a channel switching time, with reference to FIG. 14 (see FIGS. 1A-1C as appropriate).

Upon inputting an instruction of channel switch due to an operation of the remote controller Rm by the user, via the operation controlling unit 420 (step S90), the integrated broadcasting communications receiver 400 changes the channel, by the broadcast receiving unit 401, to the program channel instructed to switch (step S90). In addition, the integrated broadcasting communications receiver 400 verifies, by the termination controlling unit 410b of the application controlling unit 410, whether there is any active dependent application that is dependent on the program channel (e.g., D001) prior to the channel switching (step S91), with reference to the activated-application identification information DB (see FIG. 4) stored in the activated-application identification information storing unit 411, and, if there is an active dependent application (Yes at step S91), terminates the dependent application, following the procedures at steps S60 to S65 shown in FIG. 11 (step S92).

It should be noted that since a virtual channel is treated as a program channel selected by a virtual tuner, which is different from the implemented tuner of the broadcast receiving unit 401, an operational state of the independent application, which is managed in association with the virtual channel, is not changed, regardless of the operation of the channel switching for the broadcast receiving unit 401 that is implemented.

Upon terminating all active dependent applications (No at step S91), the integrated broadcasting communications receiver 400 obtains application activation information, by the application activation information extracting unit 402a, the application activation information extracting unit 404a, and the application activation information obtaining unit 407 (step S93). Next, the integrated broadcasting communications receiver 400 stores the application activation information obtained, by the application activation information filtering unit 408, in the application activation information storing unit 409, by coupling with the associated program channel or virtual channel (step S94).

At this time, the integrated broadcasting communications receiver 400 deletes the application activation information associated with the program channel prior to the channel switching, by the application activation information filtering unit 408, from the application activation information DB stored in the application activation information storing unit 409. This will mean that the application activation information DB stored in the application activation information storing unit 409 is updated with the application activation information associated with new program channel or virtual channel after switching the channel.

In addition, the integrated broadcasting communications receiver 400 outputs a notice of update of the application activation information, by the application activation information extracting unit 402a, the application activation information extracting unit 404a, or the application activation information obtaining unit 407, to the application controlling unit 410 (step S95), to perform life cycle control of application, by the application controlling unit 410 (step S96).

As described above, by managing application activation information associated with the independent application, in association with the virtual channel tuned in by the virtual tuner, the integrated broadcasting communications receiver 400 does not change the tuning state of the virtual channel during operation, thus an independent application associated with the virtual channel will be kept in an executable state at all times. Therefore, an independent application can be controlled in the identical way to a dependent application, either when the application is selected by the list selecting unit 412b of the application selecting unit 412, via the operation controlling unit 420, due to an operation of the remote controller Rm by the user, or with the application activation information obtained via the communications transmitting and receiving unit 406.

This also allows, for example, a usage style as follows. First, an independent application of "today's news", which collectively presents the news that have happened today, may be stored (installed) in the application storing unit 414 of the integrated broadcasting communications receiver 400. Also, the application activation information associated with this application may be stored in the application activation information storing unit 409 in advance. Then, by the user performing an operation to select activation of this application with the remote controller Rm or the like, the application of "today's news," which is an independent application, may be activated by the application executing unit 415, via the application controlling unit 410, in the identical way to a dependent application.

### OPERATION OF DECODER MANAGING MEANS

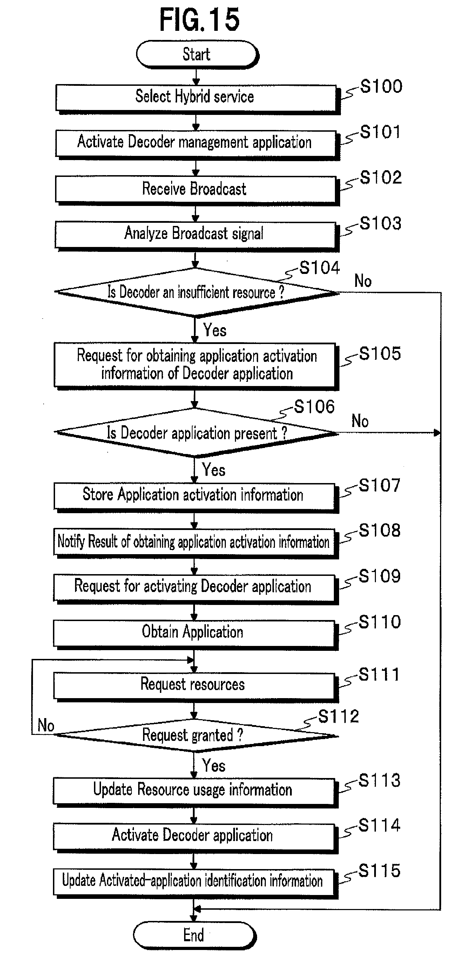

Next, a description will be given of the operation of the decoder managing unit, with reference to FIG. 15 (see FIGS. 1A-1C as appropriate). Note that it is assumed here that the decoder managing unit 418 is implemented by executing an independent application for the Hybrid service, and the application activation information, which has "AUTOSTART" set as control information (controlCode at (15), see FIG. 2), is stored in the application activation information storing unit 409.

It is also assumed that the integrated broadcasting communications receiver 400 is provided, for example, with an MPEG-2 decoder, for decoding video signals encoded in the MPEG-2 format, as a resource in the video and audio decoding unit 403, and has it registered in the resource inventory list. Then, it is assumed that a video signal encoded in H.264/AVC format has been received, but a decoder for the H.264/AVC format is not owned and not registered in the resource inventory list.

Upon selection of a hybrid service due to an operation of the remote controller Rm or the like by the user (step S100), the integrated broadcasting communications receiver 400 activates a decoder management application, which is an independent application, by the activation controlling unit 410a of the application controlling unit 410 (step S101), to work as the decoder managing unit 418.

The integrated broadcasting communications receiver 400 receives a broadcast signal by the broadcast receiving unit 401 (step S102), to analyze the data multiplexed in the broadcast signal received, by the broadcast signal analyzing unit 402 (step S103). The integrated broadcasting communications receiver 400 inputs information, by the encoding scheme determining unit 418a of the decoder managing unit 418, from the broadcast signal analyzing unit 402 about the encoding scheme of the video signal of the broadcast content included in the broadcast signal, and outputs a request to the resource managing unit 416 for querying whether a decoder associated with this encoding scheme is owned in the integrated broadcasting communications receiver 400. Then, the integrated broadcasting communications receiver 400 determines, by the resource managing unit 416, whether the decoder (resource), for which a query has been requested, is in the resource inventory list stored in the resource information storing unit 417, and outputs the result to the encoding scheme determining unit 418a. Then, based on the query result inputted from the resource managing unit 416, the integrated broadcasting communications receiver 400 determines, by the encoding scheme determining unit 418a, whether or not this decoder is an insufficient resource (step S104).

When inputting a query result that the required decoder (decoder for the H.264/AVC format) is "not owned" from the resource managing unit 416, the integrated broadcasting communications receiver 400 determines, by the encoding scheme determining unit 418a, that this decoder is an insufficient resource (Yes at step S104), and outputs the determination result to the decoder application obtainment controlling unit 418b. Then, the integrated broadcasting communications receiver 400 requests the application activation information obtaining unit 407, by the decoder application obtainment managing unit 418b, for obtaining the application activation information associated with the decoder application (complementary application) that is an independent application having a function of the decoder (decoder for the H.264/AVC format), which is an insufficient resource (step S105).

When the application activation information associated with the required decoder application has been obtained (Yes at step S106), the integrated broadcasting communications receiver 400 stores the application activation information obtained, by the application activation information obtaining unit 407, in the application activation information storing unit 409a via the application activation information filtering unit 408, by coupling with a virtual channel (step S107), and outputs a notice of obtainment result to the decoder application obtainment managing unit 418b (step S108).

Next, the integrated broadcasting communications receiver 400 outputs a request, by the decoder application obtainment managing unit 418b, to the application controlling unit 410 for activating this decoder application (step S109). As steps S110 to SS115 after this, from the obtainment of the decoder application (step S110) to the update of the activated-application identification information for the decoder application activated (step S115), are similar to steps S53 to S58 shown in FIG. 11, a detailed description thereof will be omitted. Note that FIGS. 1A-1C show this decoder application is being executed as the application-B 415b by the application executing unit 415.

It should be noted that as the decoder application becomes a child application activated by the decoder management application (parent application), the "activation source" (see FIG. 4) of the decoder application becomes the decoder management application in the activated-application identification information DB. Therefore, when the decoder management application, which is the parent application, terminates, the decoder application, which is the child application, will be terminated also, following the procedure at steps S60 to S65 shown in FIG. 11.

On the other hand, when the query result inputted from the resource managing unit 416 is "owned," the integrated broadcasting communications receiver 400 determines, by the encoding scheme determining unit 418a, that this required decoder is not an insufficient resource (No at step S104), and decodes the received video signal by the decoder (decoder for the MPEG-2 format), which is an owned resource and included in the video and audio decoding unit 403, without obtaining the decoder application separately.

Alternatively, when the application activation information associated with the required decoder application has not been obtained (No at step S106), the integrated broadcasting communications receiver 400 ends the process, by the application activation information obtaining unit 407, without performing presentation by decoding the video signal, since such a decoder application is unavailable. Note that the user may be notified at this time that the video cannot be presented, with the message displayed on the monitor Mo via the composing and presenting unit 419.

It should be noted that the encoding scheme determining unit 418a in the present embodiment is intended to input a query result from the resource managing unit 416 whether or not the decoder required for decoding is an owned resource, but is not limited thereto. The encoding scheme determining unit 418a may input the resource inventory list from the resource information storing unit 417, either directly or via the resource managing unit 416, to determine whether the subject decoder is included in the owned resources.

### RESOURCE ALLOCATION PROCESS BY RESOURCE MANAGING MEANS

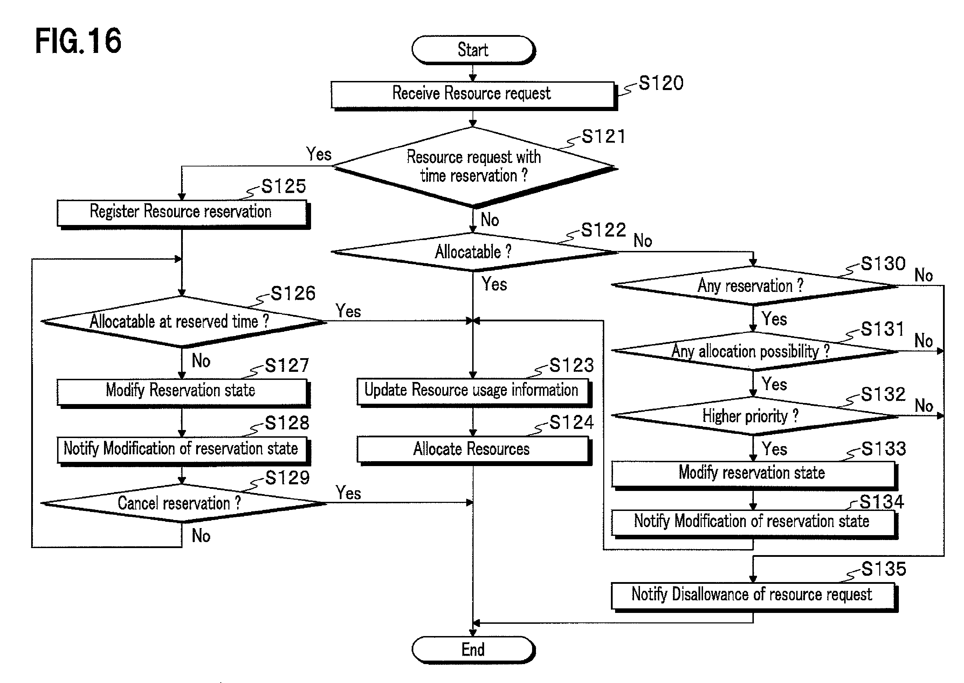

Next, a description will be given of the resource allocation process by the resource managing unit 416, with reference to FIG. 16 (see FIGS. 1A-1C and 5 as appropriate). In the present embodiment, for a resource request from the application-A 415a, application-B 415b and the like (said as "application and the like" as appropriate, in the description of the present operation), which are being executed by the application controlling unit 410 and the application execution unit 415, to the resource managing unit 416, a normal resource request (first resource request) and a resource request with time reservation (second resource request) are provided, where the first resource request seeks the allocation of one or more resources immediately at the time of the resource request, and the second resource request is a resource request which specifies the usage start time.

The integrated broadcasting communications receiver 400 receives a resource request, by the resource request receiving unit 416a of the resource managing unit (resource manager) 416, from an application and the like (step S120).

The integrated broadcasting communications receiver 400 verifies, by the resource request receiving unit 416a, whether or not the resource request received is a resource request with time reservation (step S121), and, if the request is a resource request with time reservation (Yes at step S121), registers the time to be reserved, which is the usage start time, and the priority of application execution as well as the resource type and the resource amount, as the information about the resource reservation by that resource request with time reservation, in the resource usage information DB stored in the resource information storing unit 417, by associating with the application (application identification information) which has made the resource request (step S125). Note that the priority of application execution is assumed to use the priority of the application activation information (priority at (18), see FIG. 2) associated with the application.

On the other hand, if the resource request received is not a resource request with time reservation (No at step S121), the integrated broadcasting communications receiver 400 determines, by the resource allocating unit 416b, whether or not the one or more resources can be allocated for the resource request received by the resource request receiving unit 416a (step S122). Here, the determination of whether or not the one or more resources can be allocated is made based on the resource amount (total) of the requested resource type and the sum of resource usage amount of the requested resource type in the resource inventory list and the resource usage information DB, respectively, both of which are stored in the resource information storing unit 417, depending on whether or not the requested amount of resources is available (unused amount of resources is greater than the requested amount of resources).

Then, when it is determined that the one or more resources are available and can be allocated (Yes at step S122), the integrated broadcasting communications receiver 400 performs an update, by the resource allocating unit 416b, in the resource usage information DB stored in the resource information storing unit 417, as information about the one or more resources for which allocation has been performed, for registering the resource type and its resource usage amount, by associating with the application (application identification information) for which the one or more resources have been allocated (step S123), then allocates the one or more resources (step S124).

In addition, the integrated broadcasting communications receiver 400 determines, by the resource allocating unit 416b, whether or not the one or more resources can be allocated at the reserved time for the resource reservation that has been registered at step 125 (step S126). Here, the determination about the allocation possibility is performed in the same way as the determination at step S122.

When it is determined that the allocation is possible at the reserved time (Yes at step S126), the integrated broadcasting communications receiver 400 performs an update, by the resource allocating unit 416b, to modify information about the resource reservation in the resource usage information DB, from the reservation state to the resource in-use state (step S123). Here, in order to distinguish the modification from the reservation state to the in-use state, the integrated broadcasting communications receiver 400 deletes the reservation time information of the associated resource information in the resource usage information DB.

On the other hand, when the allocation is impossible at the reserved time (No at step S126), the integrated broadcasting communications receiver 400 modifies the reservation state, by the resource allocating unit 416b, and updates the associated resource usage information in the resource usage information DB, according to the modified contents (step S127). Then, the integrated broadcasting communications receiver 400 outputs a notice of modification of the reservation state, by the resource request receiving unit 416a, to the application and the like, which has made this resource request with time reservation (step S128). Here, the modification of the reservation state means "to cancel the reservation" or "to delay the reservation time." Then, the integrated broadcasting communications receiver 400 by the resource allocating unit 416b deletes the associated resource usage information from the resource usage information DB "to cancel the reservation", and modifies the reservation time in the associated resource usage information in the resource usage information DB to the delayed time "to delay the reservation time."

In addition, if the modification of the reservation state is "to cancel the reservation" (Yes at step S129), the integrated broadcasting communications receiver 400 ends the processing of this resource request with time reservation.

On the other hand, if the modification of the reservation state is "to delay the reservation time" (No at step S129), the integrated broadcasting communications receiver 400 goes back to step S126, and determines, by the resource allocating unit 416b, whether or not the one or more resources can be allocated at the reserved time modified (step S126).

It should be noted that the application and the like, which have inputted a notice of the modification of the reservation state, have to take an appropriate action accordingly, such as to wait until the one or more resources are allocated or to make a resource request again, depending on the contents of the modification.

Further, when determining that the one or more resources are not allocatable due to insufficient resources (No at step S122), the integrated broadcasting communications receiver 400 verifies, by the resource allocating unit 416b, whether or not the one or more resources are reserved, with reference to the resource usage information DB (step S130), and if the one or more resources are reserved (Yes at step S130), determines whether or not the one or more resources become allocatable (the allocation is possible) for the new resource request by modifying (cancel or delay) the reservation state of the resource, assuming that the new resource request has been received before the reserved time (step S131).

Here, when the allocation is possible (Yes at step S131), the integrated broadcasting communications receiver 400 determines, by the resource allocating unit 416b, whether or not the priority of the application that has made the new resource request is higher than that of the application that has reserved the subject one or more resources (step S132). Then, if the priority of the application that has made the new resource request is higher than that of the application that has reserved the subject one or more resources (Yes at step S132), the integrated broadcasting communications receiver 400 modifies the reservation status of the resource, by the resource allocating unit 416b (step S133), then outputs a notice of the modification of the reservation state, by the resource request receiving unit 416a, to the application and the like that have reserved the one or more resources (step S134).

Then, the integrated broadcasting communications receiver 400 performs an update, by the resource allocating unit 416b, to register the resource usage information about the new resource request (step S123), and allocates one or more resources to the application and the like that have made the new resource request (step S124).

It should be noted that, when the new resource request is a resource request with time reservation, having a higher priority, the reservation state may be modified so as to register the resource reservation for this new resource request and delay the reservation time of the previous resource reservation, having a lower priority, after the reservation time of this new resource reservation, or to cancel the previous resource reservation.

Alternatively, if the one or more resources are not reserved (No at step S130), the allocation is impossible due to insufficient resources for the new resource request even with a modification of the resource reservation state (No at step S131), or the priority of the application that has made the new resource request is equal to or lower than that of the application that has reserved the subject one or more resources (No at step S132), the integrated broadcasting communications receiver 400 outputs a notice of disallowance for the resource request, by the resource request receiving unit 416a, to the application and the like that have made the new resource request (step S135), and ends the process.

As described above, by providing a resource request with time reservation and assuming that the resource usage time by another application is short, it is possible to execute an application using the required one or more resources, via a resource request "with time reservation", without significantly increasing the processing load of the integrated broadcasting communications receiver 400, even if the one or more resources cannot be allocated at the time when this resource request with time reservation has been outputted. In addition, by determining the execution priority of the application that has reserved the one or more resources to be allocated and has been waiting for the allocation, it is possible to give priority for execution easily to the application having a higher priority.

It should be noted that, in the present example, the determination of allocation possibility of the reserved one or more resources is performed at the reserved time, but a resource request with time reservation may be performed at an appropriate time during a time from the receiving time of the resource request until the reserved time, to allocate one or more resources when they become allocatable.

### TRANSITION FROM DATA BROADCAST

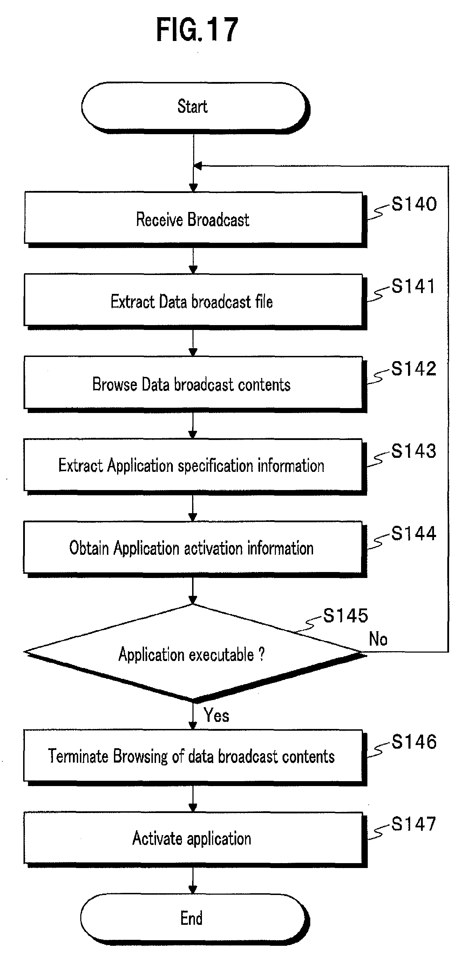

Next, a description will be given of a transition from a data broadcast service to a hybrid service, with reference to FIG. 17 (see FIG as appropriate).

The integrated broadcasting communications receiver 400 receives a broadcast signal, by the broadcast receiving unit 401 (step S140), separates the data transmitted in data carousel format from the broadcast signal received, by the broadcast signal analyzing unit 402, and extracts the data broadcast file, which includes the data broadcast contents, from the separated data, by the data broadcast file extracting unit 404 (step S141).

The integrated broadcasting communications receiver 400 converts the data broadcast contents written in BML, by the data broadcast content browsing unit 405 which is a BML browser, into the video and audio signals to be outputted to the monitor Mo and the speaker Sp, via the composing and presenting unit 419, for presentation so as to be browsable by the user (step S142).

The integrated broadcasting communications receiver 400 extracts information about specification of an application that belongs to the hybrid service, by the application specification information extracting unit 405a, from the BML document that is data broadcast content (step S143). Upon extracting the application specification information, the integrated broadcasting communications receiver 400 obtains the application control information associated with the subject application, by the application activation information requesting unit 405b, from the application activation information storing unit 409 via the application activation information filtering unit 408 (step S144), then verifies the presence or absence of the application control information associated with the subject application, by application executability determination unit 405c, and determines whether or not the application is executable, with the presence or absence of this application control information (step S145).

If the application is executable (Yes at step S145), the integrated broadcasting communications receiver 400 terminates the browsing of broadcast contents by the data broadcasting content browsing unit 405, by the content browsing terminating unit 405d (step S146), and then outputs a request, by the application activation requesting unit 405e, to the application controlling unit 410 for activating this application. Then, the integrated broadcasting communications receiver 400 activates this application, by the application executing unit 415, via the application controlling unit 410 (step S147).

Thus, it is possible to transition directly from the data broadcast service to the hybrid service.

Note that in the present example, when information about specification of an application that is executable under the hybrid service is extracted in the course of browsing data broadcast contents, the application is activated automatically to transition to the hybrid service, but instead a selection menu for this application may be displayed on the browsing screen of data broadcast contents, and upon the user entering a selection instruction from a remote controller Rm or the like, the application may be activated to transition to the hybrid service.

In addition, it may return to the data broadcast service after termination of this application under the hybrid service, and resume content browsing from the point where the browsing was terminated by the content browsing terminating unit 405d.

On the other hand, when determining that the application cannot be executed, by the application executability determination unit 405c, since the associated application control information is not found (No at step S145), the integrated broadcasting communications receiver 400 returns to step S140 and continues browsing of the data broadcast contents, by the data broadcast content browsing unit 405.

### Modification of Integrated Broadcasting Communications Receiver

Next, a description will be given of a modification of the embodiment of the integrated broadcasting communications receiver. In this modification, the application activation information filtering unit 408 stores application activation information inputted from the application activation information extracting unit 402a, the application activation information extracting unit 404a, and the application activation information obtaining unit 407 in the application activation information storing unit 409, by coupling with the program channel or the virtual channel associated with respective application activation information, regardless of whether or not the subject application activation information is associated with the program channel tuned in. Then, when the application activation information is referenced by the data broadcast content browsing unit 405, the application selecting unit 412, and the application controlling unit 410, only the application activation information associated with the program channel tuned in or the virtual channel is intended to be filtered and outputted to these units for reference.

the application activation information DB in the present variation stored in the application activation information storing unit 409 stores, as shown in FIG. 6B, application activation information file(s) associated with the program channel (D001) tuned in by the broadcast receiving unit 401 and application activation information file(s) associated with the virtual channel (D999), and additionally application activation information file(s) associated with other program channel (i.e., D002, D003, D004), which can be tuned in by the broadcast receiving unit 401.

### REFERENCE TO APPLICATION ACTIVATION INFORMATION IN MODIFICATION

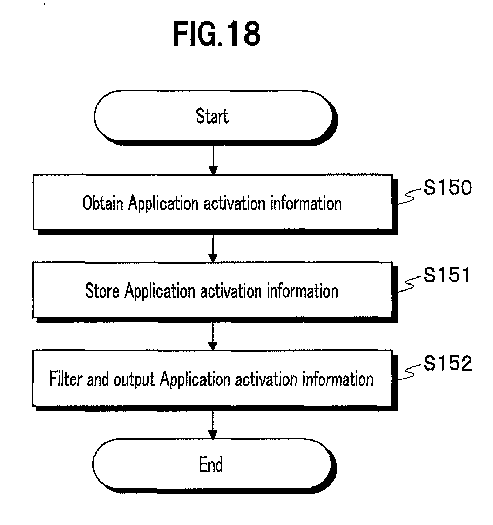

Next, a description will be given of a procedure of reference to application activation information in the modification, with reference to FIG. 18 (see FIGS. 1A-1C as appropriate).

The integrated broadcasting communications receiver 400 obtains application activation information, by the application activation information extracting unit 402a, the application activation information extracting unit 404a, and the application activation information obtaining unit 407 (step S150).

If the dependency information (serviceBound at (17), see FIG. 2) of the application activation information obtained is "true," the integrated broadcasting communications receiver 400 stores the subject application activation information, by the application activation information filtering unit 408, in the application activation information storing unit 409, by coupling with the program channel tuned in by the broadcast receiving unit 401 when the application activation information has been obtained, or with the program channel (such as D001, D002, D003, D004) described in the service information (not shown) included in the application activation information (see FIG. 6B) (step S151).

Alternatively, if the dependency information is "false," the integrated broadcasting communications receiver 400 stores the subject application activation information, by the application activation information filtering unit 408, in the application activation information storing unit 409, by coupling with the virtual channel (D999) (see FIG. 6B) (step S151).

When referring to the application activation information by the data broadcast content browsing unit 405, the application selecting unit 412, and the application controlling unit 410, the integrated broadcasting communications receiver 400 filters only the application activation information associated with the program channel tuned in (i.e., D001) or the virtual channel (D999), by the application activation information filtering unit 408, from the application activation information DB stored in the application activation information storing unit 409, then outputs to these units for reference (step S152).

Accordingly, as there is no need to update application activation information stored in the application activation information storing unit 409 one by one, even with a frequent channel switching, it is possible to provide a hybrid service quickly in response to a channel switching.

### Legend for Reference Numerals

- 100: Broadcast transmitting apparatus
- 200: Application server (Application delivery server)
- 210: Service server (content delivery server)
- 300: Application activation information server
- 310: Push notification server
- 400: Integrated broadcasting communications receiver
- 401: Broadcast receiving unit
- 402: Broadcast signal analyzing unit
- 402a: Application activation information extracting unit
- 403: Video and audio decoding unit
- 404: Data broadcast file extracting unit
- 404a: Application activation information extracting unit
- 405: Data broadcast content browsing unit
- 405a: Application specification information extracting unit
- 405b: Application activation information requesting unit
- 405c: Application executability determining unit
- 405d: Content browsing terminating unit
- 405e: Application activation requesting unit
- 406: Communication transmitting and receiving unit
- 407: Application activation information obtaining unit
- 407a: Push notification requesting unit
- 407b: Push notification receiving unit
- 408: Application activation information filtering unit
- 409: Application activation information storing unit
- 410: Application controlling unit
- 410a: Activation controlling unit
- 410b: Termination controlling unit
- 410c: Reservation managing unit
- 411: Active application identification information storing unit
- 412: Application selecting unit
- 412a: List displaying unit 412a
- 412b: List selecting unit
- 413: Application obtaining unit
- 414: Application storing unit
- 415: Application executing unit
- 415a: Application-A
- 415b: Application-B
- 416: Resource managing unit
- 416a: Resource request receiving unit
- 416b: Resource allocating unit
- 417: Resource information storing unit
- 418: Decoder managing unit
- 418a: Encoding scheme determining unit
- 418b: Decoder application obtainment managing unit (Complementary application obtainment managing unit)
- 419: Composing and presenting unit
- 420: Operation controlling unit
- ANT: Antenna
- Mo: Monitor
- NET: Communication network
- Rm: Remote controller
- S: Integrated broadcasting communications system
- Sp: Speaker

## Claims

1. An integrated broadcasting communications receiver comprising:
a broadcast receiving unit that receives information via a broadcast wave;
a communications transceiver that transmits and receives information via a communications network;
an application executing unit that executes a number of applications in parallel;
a composing and presenting unit that composes and presents contents presented by the application executing unit and program contents contained in the information received by the broadcast receiving unit;
an application obtaining unit that obtains the application via the communications transceiver; and
an application controlling unit that controls operation of the application obtained by the application obtaining unit, based on the application activation information which controls the operation of the application,
and configured with:
a resource request receiving unit which receives from the application a first resource request that requests one or more resources to be allocated at a resource request time, and a second resource request, having a time reservation feature, that specifies a usage start time for requesting one or more resources to be allocated at the specified usage start time; and
a resource allocating unit which determines whether or not the resource requests can be granted for the first and second resource requests received by the resource request receiving unit, depending on the availability of one or more resources to be allocated, by referring to information that indicates a resource usage status, and then allocates one or more resources,
wherein the resource allocating unit determines, for the first resource request received by the resource request receiving unit, at the reception time of the first resource request, whether or not the first resource request can be granted, and allocates one or more resources to the application that has made the first resource request, when the first resource request is granted,
and determines, for the second resource request received by the resource request receiving unit, at the usage start time, whether or not the second resource request can be granted, then allocates one or more resources to the application that has made the second resource request, when the second resource request is granted, or delays the usage start time and notifies the application that has made the second resource request that the usage start time has been delayed, when the second resource request is not granted.

2. The integrated broadcasting communications receiver according to claim 1, wherein, when the resource request receiving unit receives the second resource request from the application, and then receives a resource request from other application to use the same resource before the usage start time for the aforesaid second resource request, and when the execution priority of the other application is higher than the execution priority of the application which has made the aforesaid second resource request, the resource allocating unit delays the usage start time for the aforesaid second resource request, notifies the application which has made the aforesaid second resource request that the usage start time has been delayed, and grants the resource request from the other application.
